# EUROPEAN PATENT SPECIFICATION

(11) **EP 4 494 277 B1**
(45) Date of publication and mention of the grant of the patent: **17.06.2026**
(21) Application number: 23713950.6
(22) Date of filing: 14.03.2023
(51) Int. Cl.: H04B 10/112, H04B 10/60

(54) **DETECTING PULSED OPTICAL BEAMS**
DETEKTION GEPULSTER OPTISCHER STRAHLEN
DÉTECTION DE FAISCEAUX OPTIQUES PULSÉS

(30) Priority: 14.03.2022 GB 202203497
(43) Date of publication of application: 22.01.2025
(73) Proprietor: Fraunhofer UK Research Ltd, Glasgow G1 1RD (GB)
(72) Inventor: WARDEN, Matthew S, Glasgow G1 1RD (GB); CHEN, Haochang, Glasgow G1 1RD (GB)
(74) Representative: Marks & Clerk LLP
(86) International application number: PCT/GB2023/050598
(87) International publication number: WO 2023/175317

(56) References cited:
- US-A1- 2008 212 970
- US-A1- 2008 310 847
- US-A1- 2009 269 083

## Description

### FIELD

The present disclosure relates to a method for use in detecting a pulsed optical beam, an optical receiver for use in detecting a pulsed optical beam, and an associated optical system, for use in particular, though not exclusively, in non-line-of-sight free-space optical communications.

### BACKGROUND

Free-space optical communication (FSOC) systems are known for communication across the sky. Such FSOC systems are generally free of electromagnetic spectrum restrictions. Such FSOC systems may be difficult for an adversary to detect, intercept and/or disrupt. For example, FSOC systems are known for communication across the sky along a direct line-of-sight (LOS) between an optical transmitter and an optical receiver. However, it may not be possible to use such direct line-of-sight (LOS) FSOC systems when an obstacle obstructs the LOS between the optical transmitter and the optical receiver. Accordingly, it is known to use non-line-of-sight (NLOS) free-space optical communications between an optical transmitter and an optical receiver. Such known NLOS methods rely upon the scattering of light transmitted from the optical transmitter from air molecules and/or particulates such as pollutants suspended in the atmosphere and detection of the scattered light by the optical receiver. For example NLOS FSOC systems are known which use UV-C light for NLOS free-space optical communications outdoors because sunlight is strongly absorbed by the earth's atmosphere at UV-C wavelengths, and therefore there is very little background light from the sun at the earth's surface at UV-C wavelengths, even during daytime. In effect, this means that a weak UV-C signal which is scattered from the atmosphere may be detected even during the daytime due to the lack of background radiation at UV-C wavelengths. However, such known NLOS FSOC systems may have a limited range which is insufficient for communicating over longer distances.

US 2008/212970 A1 discloses a non-line of sight (NLOS) communications system and method. An ensemble of photodetectors is used to collect the light, scattered in the sky being illuminated by initial pulsed laser beam carrying information. Each detector collects scattered light from one area in free space along the initial light propagation line. The same bit of information is detected multiple times on multiple detectors during the pulse transmission along its propagation path. Signals received by multiple detectors are synchronized and processed in a digital signal processing unit. Improved system sensitivity and reliability is achieved by multiple registration of the same bit of information. Special selection of the areas in free space ensures detection of a single bit of information during the time equal to a bit period.

US 2008/310847 A1 discloses a non-line of sight (NLOS) communications system and method that implement orthogonal frequency, division multiplexing. A data generator produces a digital data stream, which is converted into M parallel frequency sub-carrier digital data streams (where M is an integer), each sub-carrier is encoded with data and an Inverse Fast Fourier Transform operation is applied, and an output signal is converted to an analog signal, which is imposed onto an optical beam generated by a light source. The beam is transmitted skywards at an elevation angle above the horizon in at least one direction. The beam is scattered due to Mie and Raleigh effects, forming a scattered waveform. At least a part of the scattered waveform is received by a receiver outputting an electrical signal, which enters a DSP unit. The DSP unit digitizes the electrical signal, performs Fourier transformation and recovers data from M sub-carrier signals.

US 2009/269083 A1 discloses an optical beam combiner which allows efficient collection of light for various applications: non-line of sight and free-space optical communications, remote sensing, optical imaging and others. A multitude of transverse scattered optical beam portions is captured by the multi-aperture array positioned perpendicular to the beam projection direction. These beam portions are combined first into a single optical waveguide with modulating the beam portions phase and coupling ratio of directional couplers in the optical beam combiner tuned to maximize the final output power. A portion of the output beam is used for the power detection and forming a feedback signal for the phases and coupling ratios adjustment. The data is recovered from the received optical beam using coherent detection.

### SUMMARY

According to an aspect of the present invention there is provided a method for use in detecting a pulsed optical beam according to claim 1. Optional features of the method for use in detecting a pulsed optical beam are defined according to the claims dependent on claim 1.

According to an aspect of the present invention there is provided a method for non-line-of-sight free-space optical communications according to claim 8. Optional features of the method for non-line-of-sight free-space optical communications are defined according to the claims dependent on claim 8.

According to an aspect of the present invention there is provided a method for determining one or more properties of a scattering medium according to claim 11. Optional features of the method for determining one or more properties of the scattering medium are defined according to the claims dependent on claim 11.

According to an aspect of the present invention there is provided an optical receiver according to claim 12. Optional features of the receiver are defined according to the claims dependent on claim 12.

According to an aspect of the present invention there is provided an optical system according to claim 13. Optional features of the system are defined according to the claims dependent on claim 13.

According to an aspect of the present disclosure there is provided a method for use in detecting a pulsed optical beam comprising a plurality of optical pulses when the pulsed optical beam is transmitted through a scattering medium, the method comprising:
using a plurality of photodetectors of a photodetector array to detect light which is scattered progressively from the same optical pulse as the optical pulse propagates through a plurality of regions of the scattering medium and which is then received progressively on different photodetectors of the photodetector array.

Such a method may have a greater contrast or an improved signal-to-noise ratio (SNR) compared with known methods for detecting pulsed optical beams not least because each photodetector of the photodetector array may detect light which is scattered from the same optical pulse as the optical pulse propagates through the different regions of the scattering medium, thereby enabling a plurality of measurements of the light scattered from the same optical pulse to be performed. This may facilitate NLOS FSOC over a greater range than prior art NLOS FSOC methods, even in daylight.

Optionally, the method comprises using the plurality of photodetectors of the photodetector array to detect light which is scattered progressively from each optical pulse as each optical pulse propagates through the plurality of regions of the scattering medium and which is then received progressively on different photodetectors of the photodetector array.

Optionally, the method comprises imaging each region of the scattering medium onto a corresponding photodetector of the photodetector array.

Optionally, the method comprises imaging light scattered from each optical pulse onto the photodetector array so as to form an image of the light scattered from each optical pulse on the photodetector array, wherein the image of each optical pulse moves progressively along the different photodetectors of the photodetector array as a result of the propagation of each optical pulse through the plurality of regions of the scattering medium.

Optionally, a length of the image of the light scattered from each optical pulse on the photodetector array is greater than, or comparable to, or equal to, a length of each photodetector.

Optionally, a width of the image of the light scattered from the pulsed optical beam on the photodetector array is greater than, or comparable to, or equal to, a width of each photodetector.

Optionally, the method comprises:
detecting the scattered light received on each photodetector from the corresponding region of the scattering medium as a function of time so as to generate a corresponding time-varying photodetector signal; and
using the plurality of photodetector signals to determine a time-varying optical receiver signal representative of a time-varying intensity of the pulsed optical beam.

Optionally, using the plurality of photodetector signals to determine the optical receiver signal comprises applying one or more time-shifts to the plurality of photodetector signals to compensate the plurality of photodetector signals for differences between the arrival times of light scattered from the different regions of the scattering medium onto the different photodetectors of the photodetector array.

Optionally, applying the one or more time-shifts to the plurality of photodetector signals to compensate the plurality of photodetector signals for differences between the arrival times of light from the different regions of the scattering medium onto the different photodetectors of the photodetector array comprises selecting one of the photodetector signals as a reference photodetector signal and applying a different time-shift to each of the one or more other photodetector signals so as to generate one or more time-shifted photodetector signals.

Optionally, using the plurality of photodetector signals to determine the optical receiver signal comprises adding the reference photodetector signal and the one or more time-shifted photodetector signals together so as to generate a time-varying summed photodetector signal.

Optionally, the summed photodetector signal is the optical receiver signal representative of the time-varying intensity of the pulsed optical beam.

Optionally, the method comprises cross-correlating a time window function with the summed photodetector signal to generate the optical receiver signal representative of the time-varying intensity of the pulsed optical beam.

Optionally, the time window function has a duration which is comparable to, or equal to, a duration of an arrival period of light which is scattered from each optical pulse and received on the photodetector array.

Optionally, using the plurality of photodetector signals to determine the optical receiver signal comprises cross-correlating different time-shifted time window functions with the different photodetector signals to generate a plurality of time-shifted cross-correlated photodetector signals.

Optionally, using the plurality of photodetector signals to determine the optical receiver signal comprises applying one or more time-shifts to a time window function to compensate the time window function for differences between the arrival times of light from the different regions of the scattering medium onto the different photodetectors of the photodiode array.

Optionally, using the plurality of photodetector signals to determine the optical receiver signal comprises adding the plurality of time-shifted cross-correlated photodetector signals so as to generate a time-varying summed photodetector signal photodetector signal.

Optionally, the summed cross-correlated photodetector signal is the optical receiver signal representative of the time-varying intensity of the pulsed optical beam.

Optionally, wherein each time-shifted time window function has a duration which is comparable to, or equal to, a duration of an arrival period of light which is scattered from each optical pulse and received on the photodetector array.

Optionally, the method comprises spectrally filtering light received from the scattering medium before the light is incident on the plurality of photodetectors of the photodetector array so as to remove background light at a wavelength which falls outside a spectral bandwidth of the pulsed optical beam.

Optionally, the method comprises determining the different time-shifts associated with the different photodetectors according to a speed at which the light scattered from the different regions of the scattering medium moves across the different photodetectors of the photodetector array.

Optionally, determining the different time-shifts associated with the different photodetectors comprises transmitting a pulsed optical calibration beam through the scattering medium, the pulsed optical calibration beam comprising a known calibration sequence of optical pulses.

Optionally, determining the different time-shifts associated with the different photodetectors comprises, for each photodetector of the photodetector array:
detecting light which is scattered from the pulsed optical calibration beam as the pulsed optical calibration beam propagates through the corresponding plurality of different regions of the scattering medium and received on the photodetector to generate a corresponding time-varying photodetector calibration signal;
cross-correlating the photodetector calibration signal with the known calibration sequence of optical pulses of the pulsed optical calibration beam to generate a cross-correlated calibration signal; and
determining the time-shift for the photodetector from a timing of a peak value of the cross-correlated calibration signal.

Optionally, the method comprises referencing clocks of the transmitter and receiver to a GNSS satellite signal such as a GPS disciplined reference oscillator. This may improve the relative stability of the clocks of the transmitter and receiver and improve a signal-to-noise ratio (SNR) of the method.

Optionally, the method comprises aligning the photodetector array relative to the pulsed optical beam so that the plurality of photodetectors of the photodetector array are capable of receiving light which is scattered from the pulsed optical beam as the pulsed optical beam propagates through the corresponding plurality of regions of the scattering medium.

Optionally, aligning the photodetector array relative to the pulsed optical beam comprises:
(i) transmitting a pulsed optical alignment beam through the scattering medium, the pulsed optical alignment beam comprising a known alignment sequence of optical pulses;
(ii) aligning the photodetector array so as to receive, on the plurality of photodetectors of the photodetector array, light from a corresponding plurality of different regions of the scattering medium arranged along a trial optical path while the pulsed optical alignment beam is propagating through the scattering medium;
(iii) for each photodetector of the photodetector array:
   detecting the light received on the photodetector from the corresponding region of the scattering medium as a function of time to generate a corresponding time-varying photodetector alignment signal;
   cross-correlating the photodetector alignment signal with the known alignment sequence of optical pulses of the pulsed optical alignment beam to generate a cross-correlated alignment signal; and
   determining a peak value of the cross-correlated alignment signal;
(iv) repeating steps (ii) and (iii) for a plurality of different trial optical paths; and
(v) aligning the photodetector array so as to receive, on the plurality of photodetectors of the photodetector array, light from the corresponding plurality of different regions of the scattering medium which are arranged along the trial optical path which optimises or maximises the peak value of one or more of the cross-correlated alignment signals.

Aligning the photodetector array relative to the pulsed optical beam may allow the pulsed optical beam to be detected. This may have applications for the detection of pulsed optical beams such as a pulsed laser beam of a laser range finder, a pulsed laser beam of a laser target designator, or a pulsed laser beam of a FSOC system such as a LOS FSOC system or a NLOS FSOC system.

Optionally, the pulsed optical alignment beam is the same as the pulsed optical calibration beam and/or the known alignment sequence of optical pulses is the same as the known calibration sequence of optical pulses.

According to an aspect of the present disclosure there is provided an optical communication method, for example a NLOS FSOC method, wherein the optical communication method comprises:
transmitting a pulsed optical beam through the scattering medium, the pulsed optical beam comprising a plurality of optical pulses; and
the method for use in detecting a pulsed optical beam as described above.

Optionally, the plurality of optical pulses of the pulsed optical beam are configured so as to carry or encode data or information.

Optionally, the optical communication method comprises extracting or decoding the data or information carried by, or encoded in, the plurality of optical pulses from the determined time-varying optical receiver signal.

Optionally, the plurality of optical pulses of the pulsed optical beam are configured to carry or encode the data or information according to a modulation or encoding scheme with a maximum peak to average power ratio. The signal-to-noise ratio (SNR) at the photodetector array may be determined by the ratio of the peak received optical power of the communications signal relative to the received optical power of the background light. Thus, maximising the peak to average power ratio may maximise the SNR at the photodetector array.

The average optical power of the transmitted optical beam may be fixed, e.g. at a level dictated by laser safety requirements, the available power at the optical transmitter, technical limitations of the optical transmitter, or a desire for the transmitted optical beam to be hard to detect by third parties. For a given average optical power, the peak power may depend on a pulse duration and a pulse repetition rate. The SNR may therefore be determined at least in part by the peak to average power ratio of the chosen modulation scheme, with a larger peak to average power ratio leading to a larger SNR. Therefore, it may be advantageous to choose a modulation or encoding scheme with a high peak to average power ratio. Use of a modulation or encoding scheme with a higher peak to average power ratio may therefore enable optical communications such as NLOS FSOC over longer distances.

Optionally, the plurality of optical pulses of the pulsed optical beam are configured to carry or encode the data or information according to a modulation or encoding scheme having a peak to average power ratio of 100 or more, 1,000 or more or 10,000 or more. Optionally, the data or information is carried or encoded using a pulse analogue modulation method.

Optionally, the data or information is carried or encoded using Pulse Position Modulation (PPM). A PPM modulation scheme is characterised by the number of time slots into which an optical pulse may be transmitted. Typically, the larger the number of time slots, the larger the peak to average power ratio. Optionally, the PPM modulation scheme has a large number of time slots e.g. 16 or more timeslots, 32 or more timeslots, 64 or more timeslots, 128 or more timeslots, 256 or more timeslots, 512 or more timeslots, or 1024 or more timeslots.

Optionally, the data or information is carried or encoded using Pulse Amplitude Modulation (PAM) or Pulse Width Modulation (PWM).

Optionally, the data or information is carried or encoded using a pulse code modulation (PCM) method such as on/off keying, return-to-zero signalling or the like.

The method may comprise modulating a direction of the pulsed optical beam. A potential advantage of doing this includes transmitting more information. This may also make it harder for an adversary to detect or intercept a communication. For example, the method may comprise modulating a pitch of the pulsed optical beam by angling the pulsed optical beam upwardly or downwardly. This may, for example, be advantageous where the pulsed optical beam passes directly over the top of the optical receiver. Angling the pulsed optical beam slightly up or down will have little effect upon the time-varying optical receiver signal representative of the time-varying intensity of the pulsed optical beam detected at the optical receiver because the image of the pulsed optical beam will stay in the same place on an image plane of the optical receiver, and there will be a very small variation in the timing of the received scattered light which could either be ignored if it is small enough, or compensated for in the analysis of the time-varying optical receiver signal. However, an adversary that is attempting to detect or intercept the communication will see a moving pulsed optical beam (unless they are on a direct line between the optical transmitter and the optical receiver), and this will make it harder to detect or intercept the signal because the adversary's optical receiver would have to compensate for the motion of the pulsed optical beam, whereas the legitimate optical receiver of the communication does not have to compensate for the motion of the pulsed optical beam.

The method may comprise modulating a yaw of the pulsed optical beam. Again, consider a situation where the pulsed optical beam passes directly over the top of the optical receiver. If the yaw of the pulsed optical beam is modulated, the optical receiver will see the pulsed optical beam moving on the image plane. If the optical receiver has a 2D photodetector array then both the timing of the optical pulses and the direction of the optical pulses can be recorded.

The method may comprise using the direction of the pulsed optical beam to encode additional information.

The method may comprise transmitting one or more additional optical beams which are additional to the pulsed optical beam used for communication.

For example, the method may comprise transmitting additional optical beams to the left and/or right of the pulsed optical beam used for communication, wherein the pulsed optical beam used for communication passes directly over the top of the optical receiver. The legitimate optical receiver can ignore these additional optical beams, as their images fall upon different locations on the image plane in which the photodetector array is located. However, an adversary that is far enough away from a direct line between the optical transmitter and the optical receiver will receive scattered light from both the pulsed optical communication beam and these additional optical beams upon the same part of the image plane of the adversary's optical receiver. This reduces the signal to background light ratio for the adversary's optical receiver (where the additional optical beams are considered to produce background light in this case). The method may comprise deliberately modulating a direction of, and/or encoding data on, the one or more additional optical beams to produce a signal that is confusing for an adversary trying to intercept the signal, for example with a similar type of modulation but different transmitted data - so that the adversary's optical receiver cannot tell which light came from the pulsed optical communication beam and which light came from the additional optical beams.

The method may comprise modulating a direction of the pulsed optical beam using a plurality of pulsed optical sources, wherein each pulsed optical source is configured to transmit a corresponding pulsed optical beam in a different direction at a different time. For example, an array of optical sources may be placed one focal length away from a collimating lens. Additionally or alternatively, the direction of the pulsed optical beam may be modulated using a fast-moving mirror. Additionally or alternatively, the direction of the pulsed optical beam may be modulated using a fast optical switch to direct light to different outputs, each of which transmits the pulsed beam in a corresponding different direction.

Additionally or alternatively, the method may comprise modulating a divergence of the pulsed optical beam for example using an elliptical lens.

The method may comprise using Wavelength Division Multiplexing (WDM) to increase the transmitted data rate. Specifically, the pulsed optical beam may comprise a plurality of different carrier wavelengths with a different stream of data encoded on each carrier wavelength and the method may comprise separating the different carrier wavelengths onto different photodetectors. The optical receiver may, for example, include a dispersive element such as a prism or diffraction grating for this purpose.

According to an aspect of the present disclosure there is provided a method for determining one or more properties of a scattering medium, wherein the pulsed optical beam comprises a plurality of optical pulses having a known probe sequence, and wherein the method comprises:
transmitting a pulsed optical beam through the scattering medium, the pulsed optical beam comprising a plurality of optical pulses having a known probe sequence;
the method for use in detecting a pulsed optical beam as described above;
detecting the scattered light received on each photodetector from the corresponding region of the scattering medium as a function of time so as to generate a corresponding time-varying photodetector signal;
using the plurality of photodetector signals to determine a time-varying optical receiver signal representative of a time-varying intensity of the pulsed optical beam; and
using the known probe sequence and the determined time-varying optical receiver signal to determine one or more properties of the scattering medium.

According to an aspect of the present disclosure there is provided an optical receiver for use in detecting a pulsed optical beam which comprises a plurality of optical pulses when the pulsed optical beam is transmitted through a scattering medium, the optical receiver comprising:
a photodetector array which includes a plurality of photodetectors,
wherein the optical receiver is configured so that the plurality of photodetectors of the photodetector array detect light which is scattered progressively from the same optical pulse as the optical pulse propagates through a plurality of regions of the scattering medium and which is then received progressively on different photodetectors of the photodetector array.

Optionally, the optical receiver is arranged so that the plurality of photodetectors of the photodetector array detect light which is scattered progressively from each optical pulse as each optical pulse propagates through a plurality of different regions of the scattering medium and which is then received progressively on the plurality of different photodetectors of the photodetector array.

Optionally, the photodetector array comprises an array of single-photon detectors.

Optionally, the photodetector array comprises an array of single-photon avalanche diodes (SPADs).

Optionally, the photodetector array comprises an array of Silicon Photomultipliers (SiPM), an array of Multi Pixel Photon Counters (MPPC) or an array of photomultiplier tubes (PMT).

Optionally, the photodetector array comprises an array of photodiodes such as an array of fast photodiodes.

Optionally, the photodetector array comprises an array of photomultiplier tubes.

Optionally, the photodetector array comprises a linear array of photodetectors.

Optionally, the photodetector array comprises a 2D array of photodetectors. Use of a 2D array of photodetectors may help to align the photodetector array relative to the pulsed optical beam, for example by relaxing the alignment tolerances between the photodetector array and the pulsed optical beam. In the case, the 2D photodetector array does not need to be aligned to the laser beam with precision but instead it just needs to be determined which photodetectors are collecting light from the pulsed optical beam, and which are not, so that the photodetector signals from the correct photodetectors can be combined to generate the time-varying optical receiver signal which is representative of the time-varying intensity of the pulsed optical beam.

Optionally, the optical receiver comprises an imaging system for imaging each region of the scattering medium onto a corresponding photodetector of the photodetector array.

Optionally, the optical receiver comprises an imaging system for imaging light scattered from each optical pulse onto the photodetector array so as to form an image of each optical pulse on the photodetector array, wherein the image of each optical pulse moves progressively along the different photodetectors of the photodetector array as a result of the propagation of each optical pulse through the plurality of different regions of the scattering medium.

Optionally, the optical receiver comprises a plurality of optical waveguides such as a plurality of optical fibres.

Optionally, one end of each optical waveguide is positioned in an image plane of the imaging system and each optical waveguide is arranged so as to guide light received from the imaging system onto a corresponding one of the photodetectors of the photodetector array.

Optionally, the optical receiver comprises a spectral filter for spectrally filtering light received from the scattering medium before the light is incident on the plurality of photodetectors of the photodetector array so as to remove background light at a wavelength which falls outside a spectral bandwidth of the pulsed optical beam.

Optionally, each optical pulse has a duration of between 1 ns and 100 ns.

Optionally, the pulsed optical beam comprises UV-B light, UV-A light, visible light, or infra-red (IR) light, for example near-IR light, short-wavelength IR light or mid-IR light.

Use of a pulsed optical beam comprising UV-B light, UV-A light, visible light, or infra-red (IR) light, for example near-IR light, short-wavelength IR light or mid-IR light may allow communications over greater distances than the use of a pulsed optical beam of UV-C light.

Use of a pulsed optical beam comprising UV-B light, UV-A light, visible light, or infra-red (IR) light, for example near-IR light, short-wavelength IR light or mid-IR light may result in an increased fraction of scattered light being Mie scattering which is more directional than the scattering which occurs when using UV-C light, thereby making it harder for an adversary to detect the pulsed optical beam.

Optionally, the pulsed optical beam comprises pulsed coherent light.

Optionally, the pulsed optical beam comprises a pulsed laser beam.

According to an aspect of the present disclosure there is provided an optical system comprising:
the optical receiver as described above; and
an optical transmitter for transmitting the pulsed optical beam through the scattering medium to thereby cause light from each optical pulse to be scattered by the scattering medium when each optical pulse propagates through the plurality of different regions of the scattering medium.

Optionally, the optical transmitter comprises a pulsed optical source which is configured to generate the plurality of optical pulses.

Optionally, the optical transmitter is configured to generate optical pulses having a duration of between 1 ns and 100 ns.

Optionally, the optical transmitter is configured to generate a plurality of optical pulses of UV-B light, UV-A light, visible light, or infra-red (IR) light, for example near-IR light, short-wavelength IR light or mid-IR light.

Optionally, the optical transmitter comprises a pulsed source of coherent light.

Optionally, the optical transmitter comprises a pulsed laser.

Optionally, the optical transmitter comprises a Q-switched laser. In a Q-switched laser, energy fed into the laser gain medium accumulates there and is stored until it is released when the laser emits a pulse. This facilitates the emission of a plurality of optical pulses with a high peak to average power ratio as it reduces the peak power requirement on the system providing power to the laser.

### BRIEF DESCRIPTION OF THE DRAWINGS

A method of detecting a laser beam will now be described by way of nonlimiting example only with reference to the drawings of which:
FIG. 1 is a schematic of a non-line-of-sight optical system;
FIG. 2 is a more detailed schematic of the non-line-of-sight optical system of FIG. 1;
FIG. 3A shows a sequence of optical pulses of a pulsed optical beam;
FIG. 3B shows the time-varying single-photon avalanche diode (SPAD) signals generated by four different SPADs of an optical receiver of the system of FIG. 1 on detection of light scattered from the sequence of optical pulses of FIG. 3A;
FIG. 3C shows the time-varying single-photon avalanche diode (SPAD) signals of FIG. 3B after time-shifting three of the four different SPAD signals;
FIG. 3D shows a summed SPAD signal generated by adding the SPAD signals of FIG. 3C;
FIG. 3E shows a time window function;
FIG. 3F shows a time-varying optical receiver signal resulting from cross-correlation of the time window function of FIG. 3E with the summed SPAD signal of FIG. 3D;
FIG. 4A shows a known calibration sequence of optical pulses;
FIG. 4B shows the time-varying SPAD signals generated by first and second SPADs of the optical receiver of the system of FIG. 1 on detection of light scattered from the known calibration sequence of optical pulses of FIG. 4A with the known calibration sequence of optical pulses superimposed on the time-varying SPAD signal generated by the first SPAD;
FIG. 4C shows a cross-correlation of the time-varying SPAD signal generated by the first SPAD and the known calibration sequence of optical pulses of FIG. 4A;
FIG. 4D shows the time-varying SPAD signals generated by first and second SPADs of the optical receiver of the system of FIG. 1 on detection of light scattered from the known calibration sequence of optical pulses of FIG. 4A with the known calibration sequence of optical pulses superimposed on the time-varying SPAD signal generated by the second SPAD;
FIG. **4E** shows a cross-correlation of the time-varying SPAD signal generated by the second SPAD and the known calibration sequence of optical pulses of FIG. 4A;
FIG. 5A shows a sequence of optical pulses of a pulsed optical beam;
FIG. 5B shows the time-varying SPAD signals generated by four different SPADs of an optical receiver of the system of FIG. 1 on detection of light scattered from the sequence of optical pulses of FIG. 5A with a corresponding time-shifted time window function superimposed on each time-varying SPAD signal;
FIG. 5C shows a time-varying optical receiver signal obtained after cross-correlating each SPAD signal of FIG. 5B with the corresponding time-shifted time window function of FIG. 5B and adding the resulting cross-correlated signals;
FIG. 5D shows the movement of an image of an optical pulse and the incidence of background photons on four different SPADs of the optical receiver of the system of FIG. 1 as a function of time;
FIG. 6A is a schematic of the non-line-of-sight optical system of FIG. 1 for the case where an optical transmitter of the optical system emits a pulsed optical beam comprising a shorter optical pulse and each individual single-photon avalanche diode (SPAD) of an optical receiver of the optical system has a wider field-of-view (FOV);
FIG. 6B is a schematic of the non-line-of-sight optical system of FIG. 1 for the case where an optical transmitter of the optical system emits a pulsed optical beam comprising a longer optical pulse and each individual SPAD of an optical receiver of the optical system has a narrower FOV; and
FIG. 6C is a schematic of the non-line-of-sight optical system of FIG. 1 for the case where an optical transmitter of the optical system emits a pulsed optical beam comprising a longer optical pulse and each individual SPAD of an optical receiver of the optical system has a wider FOV.

### DETAILED DESCRIPTION OF THE DRAWINGS

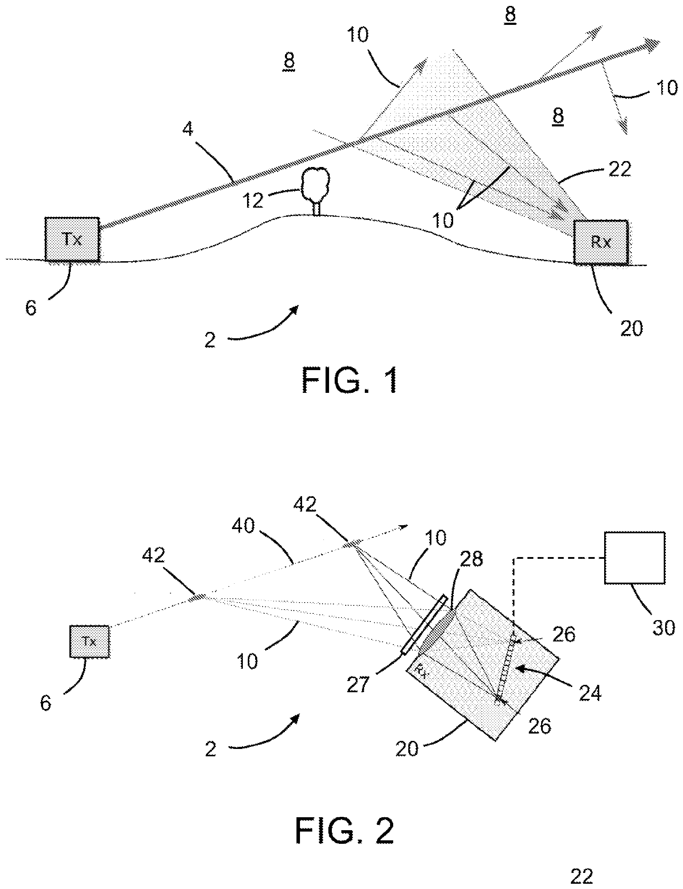

Referring initially to FIG. 1 there is shown a non-line-of-sight optical system generally designated 2 comprising an optical transmitter 6 and an optical receiver 20. The optical transmitter 6 is configured to transmit the pulsed optical beam 4 comprising a plurality of optical pulses through a scattering medium 8 to thereby cause light from each optical pulse to be scattered by the scattering medium 8 to form scattered light 10 when each optical pulse propagates through a plurality of different regions of the scattering medium 8. The pulsed optical beam 4 may comprise a pulsed optical beam of UV-B light, UV-A light, visible light or infrared (IR) light such as a pulsed optical beam of coherent UV-B light, UV-A light, visible light or IR light. For example, the pulsed optical beam 4 may comprise a pulsed laser beam of UV-B light, UV-A light, visible light or IR light. In this regard, the optical transmitter 6 may include a pulsed laser such as a Q-switched laser for generating optical pulses having a duration in the range of 1 ns - 100 ns. As will be understood by one of ordinary skill in the art, the scattering medium 8 may take the form of air molecules and/or particulates such as pollutants suspended in the atmosphere. As may be appreciated from FIG. 1, the optical transmitter 6 is configured to transmit the pulsed optical beam 4 over one or more obstacles 12 and the optical receiver 20 is configured to receive the light scattered from each region of the scattering medium 8 located within a field-of-view (FOV) 22 of the optical receiver 20. As will be described in more detail below, the system 2 is a non-line-of-sight (NLOS) system which may be used for detecting the pulsed optical beam 4 for a number of different technical applications and in particular, though not exclusively, for free-space optical communications (FSOC) between the optical transmitter 6 and the optical receiver 20.

Use of a pulsed optical beam 4 of UV-B light, UV-A light, visible light or IR light may result in less absorption and/or scattering in the scattering medium 8 compared with the use of a pulsed optical beam of UV-C light, thereby allowing communications over greater distances compared with the use of a pulsed optical beam of UV-C light. However, as will be described in more detail below, the presence of more background light from the sun during the daytime at UV-B, UV-A, visible or near-IR wavelengths means that the optical receiver 20 needs to be specifically configured to reduce the amount of background light from the sun which is detected to thereby maximise the contrast or signal-to-noise ratio (SNR) of the method of detection.

As shown in FIG. 2, the optical receiver 20 comprises a linear array of photodetectors in the form of a linear array 24 of single-photon avalanche diodes (SPADs) 26. The optical receiver 20 further comprises an imaging system in the form of a lens 28 for imaging light onto the SPAD array 24. The optical receiver 20 further comprises an optical filter 27 disposed in front of the lens 28 so that the lens 28 is positioned between the optical filter 27 and the SPAD array 24. The optical filter 27 defines a narrow spectral passband which is configured to transmit the near-IR light scattered from the pulsed optical beam 4 but to reject any unwanted background light which is incident on the optical filter 27 at a wavelength which falls outside a spectral bandwidth of the pulsed optical beam 4.

The system 2 further comprises a processing resource 30. As indicated by the dashed line in FIG. 2, the processing resource 30 and the SPAD array 24 are configured for communication.

In use, the optical transmitter 6 transmits the pulsed near-IR optical beam 4 along an optical path 40. The optical receiver 20 is aligned with the pulsed optical beam 4 so that light scattered from each optical pulse 42 is filtered by the optical filter 27 and then imaged by the lens 28 onto the SPAD array 24 so as to form an image of the light scattered from each optical pulse 42 on the SPAD array 24, wherein the image of the light scattered from each optical pulse 42 moves progressively along the different SPADs 26 of the SPAD array 24 as each optical pulse 42 propagates through the plurality of different regions of the scattering medium 8 located within the FOV 22 of the optical receiver 20.

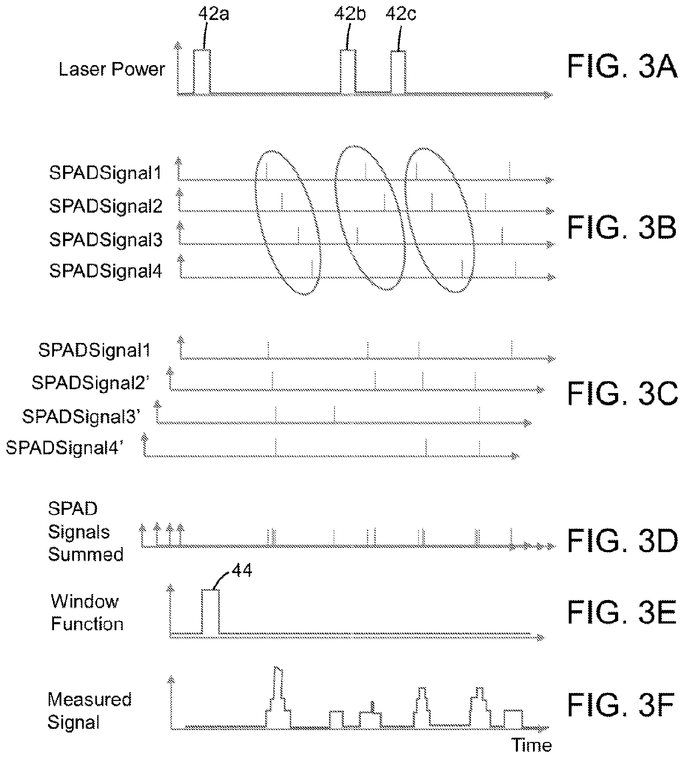

As will now be described with reference to FIGS. 3A to 3F, each SPAD 26 detects the scattered light 10 that it receives from the corresponding region of the scattering medium 8 as a function of time so as to generate a corresponding time-varying photodetector signal in the form of a time-varying SPAD signal and the processing resource 30 uses the plurality of SPAD signals to determine a time-varying optical receiver signal representative of a time-varying intensity of the pulsed optical beam 4.

FIG. 3A shows an example of the variation of the optical power of the pulsed optical beam 4 as a function of time in the form of a sequence of three different optical pulses 42a, 42b and 42c. FIG. 3B shows the corresponding time-varying SPAD signals SPADSignal1 - SPADSignal4 detected by four of the SPADs 26 when the optical receiver 20 is aligned with the pulsed optical beam 4 so that the lens 28 images light scattered from the different optical pulses 42a, 42b and 42c onto the SPAD array 24. As will be understood by one of skill in the art, each SPAD 26 generates an electrical pulse such as a voltage pulse when it detects a photon so that each of the time-varying SPAD signals SPADSignal1 - SPADSignal4 comprises a series of electrical pulses. The generation of the electrical pulses by each SPAD 26 is statistical in nature with each SPAD 26 generating a series of electrical pulses, wherein the probability of the generation of an electrical pulse at any instant in time generally depends on the instantaneous intensity of the light imaged onto each SPAD 26 by the lens 28, including any light scattered from the pulsed optical beam 4 and any background light.

There is a time delay between the optical transmitter transmitting an optical pulse 42 and each SPAD 26 receiving light scattered from that optical pulse 42. The time delay is in general different for each SPAD 26 because each SPAD 26 receives light scattered from a different region along the optical path 40 of the pulsed optical beam 4 through the scattering medium 8 and it takes a different time for the optical pulses 42 to reach each region, and a different time for scattered light to travel between each region and the corresponding SPAD 26.

One or more of the time-varying SPAD signals SPADSignal1 - SPADSignal4 include one or more electrical pulses generated as a result of scattering of the pulsed optical beam 4 from one or more corresponding regions of the scattering medium 8 as one or more of the optical pulses 42 of the pulsed optical beam 4 propagate through the one or more corresponding regions of the scattering medium 8. For example, as highlighted by the leftmost oval in FIG. 3B, each SPAD 26 detects one photon of light scattered from the first laser pulse 42a resulting in a corresponding electrical pulse in each SPAD signal SPADSignal1 - SPADSignal4. As highlighted by the middle oval in FIG. 3B, electrical pulses are generated as a result of the arrival of background photons on the different SPADs 26. These background photons arrive at random times. As highlighted by the rightmost oval in FIG. 3B, three out of four of the SPADs 26 detect one photon of light scattered from the second laser pulse 42b resulting in a corresponding electrical pulse in SPAD signals SPADSignal1, SPADSignal2 and SPADSignal4, but no corresponding electrical pulse in SPAD signal SPADSignal3.

The processing resource 30 applies one or more time-shifts to the plurality of SPAD signals SPADSignal1 - SPADSignal4 to compensate the plurality of SPAD signals SPADSignal1 - SPADSignal4 for the differences between the arrival times of light scattered from the different regions of the scattering medium 8 onto the different SPADs 26 of the SPAD array 24. Specifically, as shown in FIG. 3C, the processing resource 30 selects SPAD signal SPADSignal1 detected by a first SPAD as a reference SPAD signal and applies a different time-shift to each of the one or more other SPAD signals SPADSignal2 - SPADSignal4 so as to generate one or more time-shifted SPAD signals SPADSignal2' - SPADSignal4'. As may be appreciated from FIG. 3C, the time-shifts applied to the one or more other SPAD signals SPADSignal2 - SPADSignal4 are selected so that the electrical pulses generated as a result of the detection of photons scattered from the optical pulses now line up. However, since background photons arrive at random times, the electrical pulses generated as a result of the detection of photons of background light also occur at random times such that it is unlikely that the electrical pulses generated as a result of the detection of photons of background light will line up once the time-shifts have been applied to the one or more other SPAD signals SPADSignal2 - SPADSignal4.

The processing resource 30 then adds the reference SPAD signal SPADSignal1 and the one or more time-shifted photodetector signals SPADSignal2' - SPADSignal4' together so as to generate a time-varying summed SPAD signal shown in FIG. 3D which includes clusters of electrical pulses around the times at which the first SPAD detected scattered light from each of the optical pulses 42a, 42b and 42c.

The processing resource 30 then cross-correlates a time window function 44 shown in FIG. 3E with the sum of the time-shifted SPAD signals shown in FIG. 3D to generate the optical receiver signal shown in FIG. 3F, wherein the time window function has a duration which is comparable to a duration of an arrival period of light which is scattered from each of the optical pulses 42a, 42b and 42c and received on the SPAD array 24. As may be appreciated from a comparison of the time-varying optical receiver signal shown in FIG. 3F with the time-varying intensity of the pulsed optical beam 4 shown in FIG. 3A, the time-varying optical receiver signal shown in FIG. 3F is representative of the time-varying intensity of the pulsed optical beam 4.

Although the method of determining the time-varying optical receiver signal representative of the time-varying intensity of the pulsed optical beam 4 was described above with reference to FIGS. 3A to 3F for the particular case of four SPADs 26, it should be understood that the SPAD array 24 may comprise less than four SPADs 26 or more than four SPADs 26 and that the method of determining the time-varying optical receiver signal representative of the time-varying intensity of the pulsed optical beam 4 may be adapted accordingly.

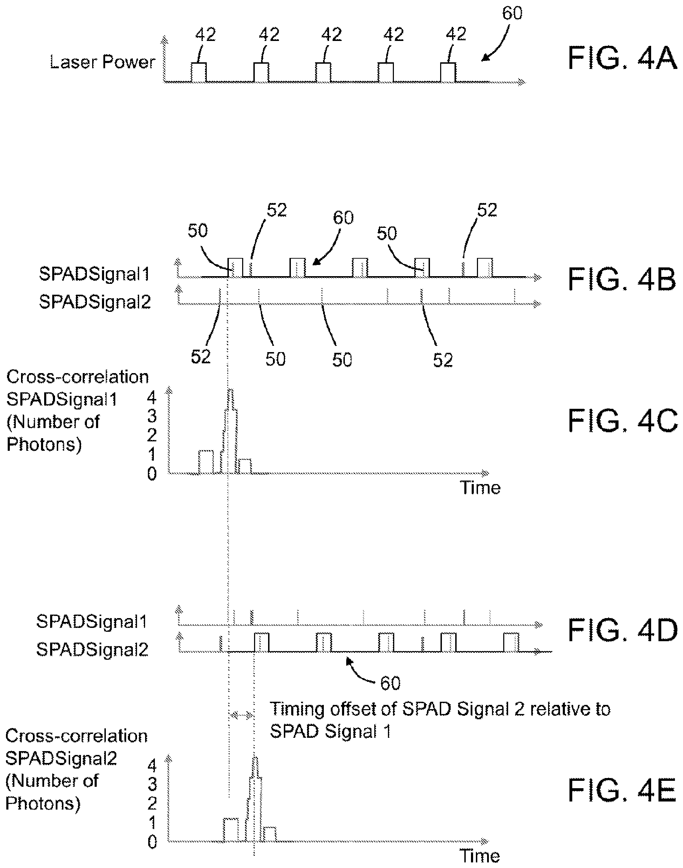

The method of selecting the different time-shifts will now be described with reference to FIGS. 4A to 4E. In effect, the method comprises determining the different time-shifts associated with the different SPADs 26 according to a speed at which the scattered light 10 from the different regions of the scattering medium 8 moves across the different SPADs 26 of the SPAD array 24.

FIG. 4A shows an example of the variation of the optical power of a pulsed optical calibration beam as a function of time in the form of a known calibration sequence 60 of optical pulses having a known constant pulse repetition rate. FIG. 4B shows the corresponding time-varying SPAD signals SPADSignal1 and SPADSignal2 detected by two of the SPADs 26 when the optical receiver 20 is aligned with the pulsed optical calibration beam so that the lens 28 images light scattered from each optical pulse 42 onto the SPAD array 24 so as to form an image of each optical pulse 42 on the SPAD array 24. As shown in FIG. 4B, each SPAD signal SPADSignal1 and SPADSignal2 includes electrical pulses 50, wherein each electrical pulse 50 is generated as a result of the arrival of a photon which is scattered from the pulsed optical calibration beam. Each SPAD signal SPADSignal1 and SPADSignal2 further includes further electrical pulses 52, wherein each further electrical pulse 52 is generated as a result of the arrival of a photon of background light.

The processing resource 30 then cross-correlates time-varying SPAD signal SPADSignal1 with the known calibration sequence 60 of the optical pulses 42 to generate a first cross-correlated calibration signal shown in FIG. 4C for the first SPAD. The processing resource 30 then determines the time-shift for the first SPAD from a timing of the peak value of the first cross-correlated calibration signal of FIG. 4C.

Similarly, as shown in FIG. 4D, the processing resource 30 cross-correlates time-varying SPAD signal SPADSignal2 with the same known calibration sequence 60 of the optical pulses 42 to generate a second cross-correlated calibration signal shown in FIG. **4E** for the second SPAD. As indicated by the dashed lines in FIGS. 4B - **4E****,** the processing resource 30 then determines the time-shift for the second SPAD relative to the time shift for the first SPAD from a timing of the peak value of the second cross-correlated calibration signal of FIG. 4E. Although the method of determining the different time-shifts for each SPAD 26 was described above with reference to FIGS. 4A **to 4E** for the particular case of two SPADs 26, it should be understood that the SPAD array 24 may comprise more than two SPADs 26 and that the method of determining the different time-shifts for each SPAD 26 may be adapted accordingly.

One of ordinary skill in the art will understand that the method for detecting the pulsed optical beam 4 described above may provide a greater contrast or a greater signal-to-noise ratio (SNR) than known methods for detecting pulsed optical beams not least because the different SPADs 26 of the SPAD array 24 detect the light which is scattered progressively from the same optical pulse 42 as the optical pulse 42 propagates through different regions of the scattering medium 8 and which is then received progressively on the different SPADs 26 of the SPAD array 24, thereby enabling a plurality of measurements of the light scattered from the same optical pulse 42 to be performed. As such, one of skill in the art will understand that increasing the number of SPADs 26 in the SPAD array 24 may increase the contrast or the SNR of the method for detecting the optical pulses 42 of the pulsed optical beam 4.

The contrast or SNR of the method for detecting the pulsed optical beam 4 described above is also dependent on a number of other factors. For example, the use of the spectral filter 27 may serve to reduce unwanted background light which is incident on the SPAD array 24. Moreover, the system 2 may be configured so that a width of the image of the light scattered from the pulsed optical beam 4 on the SPAD array 24 is comparable to, or equal to, a width of each SPAD 26 so as to minimise the detection of background light by the SPADs 26 of the SPAD array 24 from regions of the scattering medium either side of the pulsed optical beam 4. For example, for a given width of pulsed optical beam 4 and a given spatial arrangement of the optical transmitter 6 and the optical receiver 20, the configuration of the optical receiver 20 may be adjusted so that the width of the image of the light scattered from the pulsed optical beam 4 on the SPAD array 24 is comparable to, or equal to, a width of each SPAD 26.

Similarly, the system 2 may be configured so that a length of the image of the light scattered from each optical pulse 42 on the SPAD array 24 is comparable to, or equal to, a length of each SPAD 26. For example, for a given optical pulse duration and a given spatial arrangement of the optical transmitter 6 and the optical receiver 20, the configuration of the optical receiver 20 may be adjusted so that the length of the image of the light scattered from each optical pulse 42 on the SPAD array 24 is comparable to, or equal to, the length of each SPAD 26 so as to maximise the contrast or signal-to-noise ratio (SNR) when the scattered light from an optical pulse is imaged onto the centre of each SPAD 26.

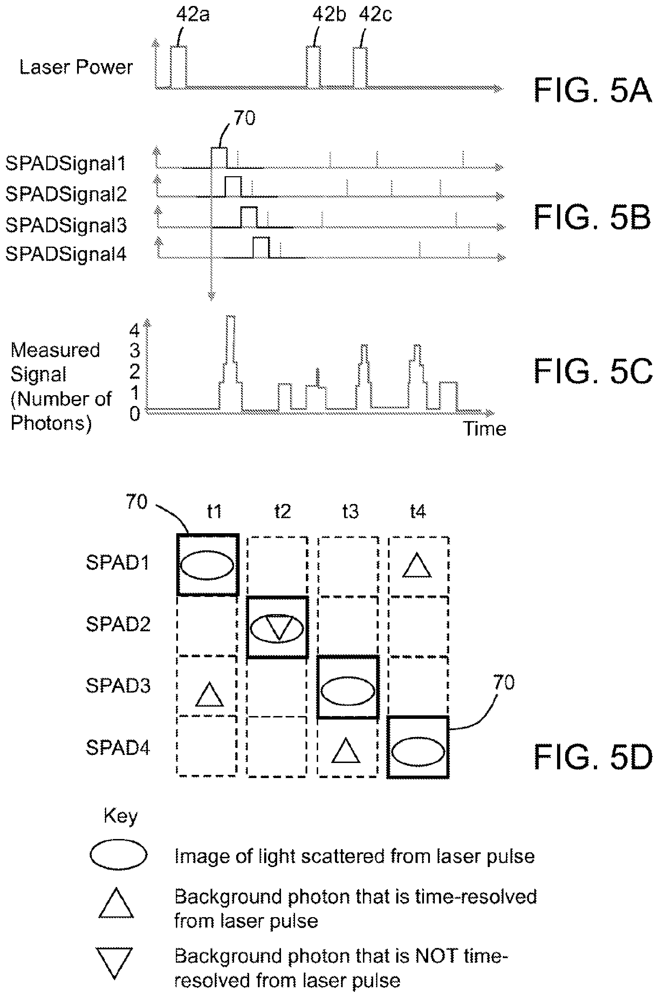

As will now be described with reference to FIGS. 5A - 5D, the contrast or the SNR of the detection method may be further enhanced by cross-correlating each time-varying SPAD signal SPADSignal1 - SPADSignal4 with a corresponding time-shifted window function 70 which has a duration which is selected to match a duration of an arrival period of the light scattered from each optical pulse 42a, 42b, 42c on each SPAD 26. FIG. 5A shows an example of the variation of the optical power of the pulsed optical beam 4 as a function of time in the form of a sequence of three different optical pulses 42a, 42b and 42c. FIG. 5B shows the corresponding time-varying SPAD signals SPADSignal1 - SPADSignal4 detected by four of the SPADs 26 when the optical receiver 20 is aligned with the pulsed optical beam 4 so that the lens 28 images light scattered from the different optical pulses 42a, 42b, 42c onto the SPAD array 24. Also shown in FIG. 5B, are a plurality of different time-shifted time window functions 70, each time-shifted time window function 70 corresponding to a different one of the time-varying SPAD signals SPADSignal1 - SPADSignal4. Each time-shifted time window function 70 is time-shifted relative to each of the other time-shifted time window functions 70 by the same time-shifts used to compensate the plurality of SPAD signals SPADSignal1 - SPADSignal4 for the differences between the arrival times of light scattered from the different regions of the scattering medium 8 onto the different SPADs 26 of the SPAD array 24 as already described above with reference to FIGS. 3A - 3F and 4A - 4E. Moreover, each time-shifted time window function 70 is cross-correlated with the corresponding time-varying SPAD signal SPADSignal1 - SPADSignal4 to determine a corresponding cross-correlated SPAD signal and the cross-correlated SPAD signals are summed to generate the time-varying optical receiver signal representative of the time-varying intensity of the pulsed optical beam 4 shown in FIG. 5C. As may be appreciated from a comparison of the time-varying optical receiver signal representative of the time-varying intensity of the pulsed optical beam 4 shown in FIGS. 3F and 5C, the method of determining the time-varying optical receiver signal representative of the time-varying intensity of the pulsed optical beam 4 described with reference to FIGS. 5A - 5C is completely equivalent to the method of determining the time-varying optical receiver signal representative of the time-varying intensity of the pulsed optical beam 4 described with reference to FIGS. 3A-3F.

FIG. 5D illustrates the movement of an image of light scattered from any one of optical pulses 42a, 42b, 42c along four different SPADs, SPAD1 - SPAD4 of the SPAD array 24 as said optical pulse moves along the optical path 40. At a first time t1, the image of the scattered light is located on a first SPAD, SPAD1. At a second time t2, the image of the scattered light is located on a second SPAD, SPAD2. At a third time t3, the image of the scattered light is located on a third SPAD, SPAD3. At a fourth time t4, the image of the scattered light is located on a fourth SPAD, SPAD4. Also shown in FIG. 5D are background photons incident on the different SPADs, SPAD1-SPAD4 at random times. Specifically, a first background photon arrives on SPAD1 at time t4, a second background photon arrives on SPAD2 at time t2, a third background photon arrives on SPAD3 at time t1, and a fourth background photon arrives on SPAD4 at time t3. Also shown in FIG. 5D are the time-shifted time window functions 70 for the case when the time-shifted time window functions 70 coincide with the arrival period of the light scattered from said optical pulse on each SPAD, SPAD1-SPAD4 resulting in the largest peak in the time-varying optical receiver signal shown in FIG. 5C. As may be appreciated from FIG. 5D, the only background photon which contributes to the largest peak in the time-varying optical receiver signal shown in FIG. 5C is the second background photon which arrives on SPAD2 at the same time t2 as the light scattered from said optical pulse. Furthermore, the other background photons arriving at SPAD1 at time t4, arriving at SPAD3 at time t1, and arriving at SPAD4 at time t3, only contribute to the time-varying optical receiver signal shown in FIG. 5C at times when the time-shifted time window functions 70 are shifted in time so that the time-shifted time window functions 70 no longer coincide with the arrival time of the light scattered from said optical pulse on each SPAD, SPAD1-SPAD4. In effect, this means that the other background photons only contribute to background noise artefacts or features in the time-varying optical receiver signal shown in FIG. 5C between the peaks in the time-varying optical receiver signal which correspond to the arrival of light scattered from the optical pulses 42a, 42b and 42c. In other words, the use of the time-shifted time window functions 70, serves to time-resolve the arrival of many of the photons of background light from the arrival of the photons of light which is scattered from the optical pulses 42a, 42b and 42c and then imaged onto the SPAD array 24.

The impact of the background noise artefacts or features in the time-varying optical receiver signal shown in FIG. 5C is reduced by having time-shifted window functions 70 that have a duration which is selected to match an arrival period of the light scattered from each optical pulse 42a, 42b, 42c on each SPAD 26. The amplitude of the background noise artefacts or features in the time-varying optical receiver signal shown in FIG. 5C is determined by the number of background photons that are detected within a time period equal to the duration of the time-shifted window functions 70. This may be understood to be because the time-varying optical receiver signal shown in FIG. 5C is constructed by performing a cross-correlation between the time-shifted window functions 70 and the SPAD signals SPADSignal1 to SPADSignal4 in FIG. 5B. The amplitude of the time-varying optical receiver signal shown in FIG. 5C at any point in time is determined by the number of photons that were detected within the time periods defined by each of the time-shifted window functions 70. As background photons generally arrive at random times, with substantially uniform probability, the average contribution to the time varying optical receiver signal shown in FIG. 5C from background photons is proportional to the duration of the time-shifted window functions 70. Therefore, using time-shifted window functions 70 that each have a duration which is selected to match an arrival period of the light scattered from each optical pulse 42a, 42b, 42c on each SPAD 26 has the advantage that it reduces the average contribution to the time varying optical receiver signal that comes from background photons. This improves the ability of the optical receiver 20 to detect signal photons that are emitted from the optical transmitter 6 and scattered by the scattering medium 8. In effect, the method for detecting the pulsed optical beam 4 described above allows the use of short-duration time-shifted window functions 70, without substantially reducing the number of scattered photons detected by the optical receiver 20. This may enhance the contrast or the SNR of the method for detecting the pulsed optical beam 4.

As described above, the duration of the time-shifted window functions is selected to match an arrival period of the light scattered from any one of the optical pulses 42a, 42b, 42c on each SPAD 26. This may be achieved by trying a range of different time-shifted window function durations and selecting the duration that maximises the SNR at the optical receiver 20. If the duration is too short, then some of the photons scattered from an optical pulse are not summed at the optical receiver 20 (as they arrive at times that are too-widely separated) and the SNR is reduced. If the duration is too long then additional background photons are unnecessarily summed into the photon count and the SNR is reduced. Accordingly, the SNR is maximised when the time-window duration matches the arrival period of light which is scattered from any one of the optical pulses 42a, 42b, 42c.

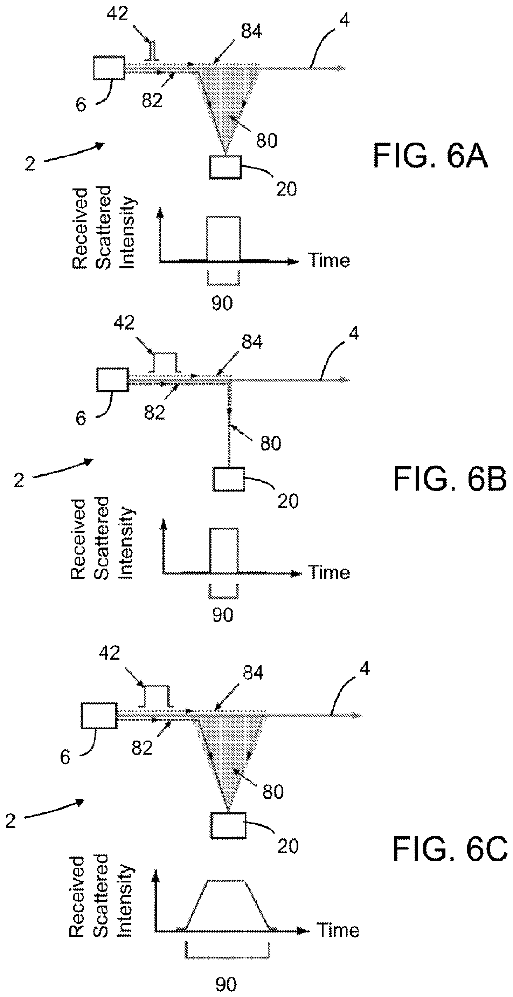

As an alternative to trying a range of different time-shifted window function durations and selecting the duration that maximises the SNR at the optical receiver 20, the duration of the time-shifted window functions 70 may be selected based on the arrival period of the light scattered from any one of the optical pulses 42a, 42b, 42c on each SPAD 26 of the optical receiver 20. As will now be described with reference to FIGS. 6A - 6C below, the arrival period 90 of the light scattered from any one of the optical pulses 42a, 42b, 42c on each SPAD 26 of the optical receiver 20 depends on the duration of each optical pulse 42a, 42b, 42c and the field-of-view (FOV) 80 of each individual SPAD 26. It should be understood that the FOV 80 of each individual SPAD 26 depends on the size of an individual SPAD 26 and the relative spatial arrangement of the lens 28, and the SPAD array 24. The duration of the optical pulses 42a, 42b, 42c will typically be known, as this will have been designed into the system beforehand. The time taken for an optical pulse 42a, 42b, 42c to traverse the FOV 80 of a SPAD 26 depends upon the distance between the receiver 20 and the path 4 of the optical pulses 42a, 42b, 42c, which could vary and therefore needs to be measured on a case-by-case basis.

For example, FIG. 6A shows the optical system 2 for the case where the optical transmitter 6 emits a pulsed optical beam 4 comprising a shorter optical pulse 42 and each individual SPAD 26 has a wider FOV 80. Light which is scattered from the optical pulse 42 within the FOV 80 is received by the corresponding SPAD 26. The scattered light which is received by the corresponding SPAD 26 follows an optical path which has a length which is greater than or equal to the length of the shortest optical path 82 and which is less than or equal to the length of the longest optical path 84. For the case shown in FIG. 6A, the optical pulse 42 is so short and the FOV 80 of each individual SPAD 26 is so wide that the arrival period 90 of the scattered light on the SPAD 26 is essentially determined by the difference between the arrival time of scattered light which has travelled along the longest optical path 84 and the arrival time of scattered light which has travelled along the shortest optical path 82.

FIG. 6B shows the optical system 2 for the case where the optical transmitter 6 emits a pulsed optical beam 4 comprising a longer optical pulse 42 and each individual SPAD 26 has a narrower FOV 80. For the case shown in FIG. 6B, the optical pulse 42 is so long and the FOV 80 of each individual SPAD 26 is so narrow that the arrival period 90 of the scattered light on the SPAD 26 is essentially determined by the duration of the optical pulse 42.

FIG. 6C shows the optical system 2 for the case where the optical transmitter 6 emits a pulsed optical beam 4 comprising a longer optical pulse 42 and each individual SPAD 26 has a wider FOV 80. For the case shown in FIG. 6C, the optical pulse 42 is so long and the FOV 80 of each individual SPAD 26 is so wide that the arrival period 90 of the scattered light on the SPAD 26 is determined by the difference between the arrival time of scattered light which has travelled along the longest optical path 84 and the arrival time of scattered light which has travelled along the shortest optical path 82 in combination with the duration of the optical pulse 42.

The time taken for an optical pulse 42a, 42b, 42c to traverse the FOV 80 of an individual SPAD 26 of the SPAD array 24 may be determined from knowledge of the time delay between observing the optical pulse 42a, 42b, 42c on adjacent SPADs 26 of the SPAD array 24. For example, if the individual SPADs 26 are arranged in a uniform SPAD array 24 with no gaps between them (i.e. the spacing of the SPADs 26 of the SPAD array 24 is equal to a dimension of an active area of each SPAD 26) then the time delay between observing a signal on one SPAD 26 of the SPAD array 24 and observing a signal on the next adjacent SPAD 26 of the SPAD array 24 will be equal to the time for the optical pulse 42a, 42b, 42c to traverse the FOV 80 of a single SPAD 26 of the SPAD array 24.

The method for detecting the pulsed optical beam 4 described above may be used for a number of different technical applications and in particular, though not exclusively, for NLOS free-space optical communications (FSOC) between the optical transmitter 6 and the optical receiver 20. To enable NLOS FSOC between the optical transmitter 6 and the optical receiver 20, the plurality of optical pulses of the pulsed optical beam 4 may be configured so as to carry or encode data or information and the processing resource 30 may be configured to extract or decode the data or information carried by, or encoded in, the plurality of optical pulses from the determined time-varying optical receiver signal such as the determined time-varying optical receiver signal shown in FIG. 3F. For example, as shown in FIG. 3A, the timing of the optical pulses may be varied so as to carry or encode data or information using Pulse Position Modulation (PPM) and the processing resource 30 may be configured to extract or decode the data or information carried by, or encoded in, the timing of the optical pulses from the determined time-varying optical receiver signal shown in FIG. 3F. As a result of the enhanced contrast or the improved SNR of the method for detecting the pulsed optical beam 4 described above, NLOS FSOC may be achieved over a greater range than prior art NLOS FSOC methods, even in daylight.

In other FSOC methods, data or information may be carried or encoded using a pulse analogue modulation method of a kind other than PPM such as Pulse Amplitude Modulation (PAM) or Pulse Width Modulation (PWM). In other FSOC methods, data or information may be carried or encoded using a pulse code modulation (PCM) method such as on/off keying, return-to-zero signalling or the like. Furthermore, as will be understood by one of ordinary skill in the art, cross-correlating a time window function 44 with the sum of time-shifted SPAD signals to generate a time-varying optical receiver signal as described above with reference to FIGS. 3A - 3F or summing cross-correlated SPAD signals generated by cross-correlating time-shifted time window functions 70 with time-varying SPAD signals to generate a time-varying optical receiver signal as described above with reference to FIGS. 5A - 5C serves to time-resolve the arrival of the photons of light scattered from a plurality of optical pulses 42a, 42b, 42c. In the context of FSOC, this improved timing resolution allows for higher data rates. For example, if transmitting data using on/off keying then bits can simply be sent at a faster rate compared to a system with worse timing resolution. Or, if using pulse position modulation (PPM), then each optical pulse could potentially occupy a larger number of (shorter duration) time slots, allowing information to be transmitted at higher data rates.

It should also be understood that use of a pulsed optical beam comprising UV-B light, UV-A light, visible light or infra-red (IR) light may result in an increased fraction of scattered light being Mie scattering which is more directional than the scattering which occurs when using UV-C light, thereby making it harder for an adversary to detect the pulsed optical beam, especially when the optical receiver 20 is positioned close to the pulsed optical beam 4. This may be important for secure communications.

In a further technical application, the method for detecting the pulsed optical beam 4 described above may be used for determining one or more properties of the scattering medium 8. For example, the method may comprise transmitting a pulsed optical beam comprising a plurality of optical pulses having a known probe sequence through the scattering medium 8 and using the known probe sequence and the determined time-varying optical receiver signal to determine one or more properties of the scattering medium 8.

As will be appreciated by one of skill in the art, the methods described above assume that the SPAD array 24 is aligned relative to the optical path 40 of the pulsed optical beam 4 so that the plurality of SPADs 26 of the SPAD array 24 are capable of receiving light which is scattered from the pulsed optical beam 4 as the pulsed optical beam 4 propagates through the corresponding plurality of regions of the scattering medium 8. In practice, the optical path 40 of the pulsed optical beam 4 through the scattering medium 8 may be known with sufficient accuracy *a priori* so that the SPAD array 24 may simply be aligned relative to the known optical path 40.

However, where the optical path 40 of the pulsed optical beam 4 is unknown or is only known to a limited degree of accuracy, it is necessary to align the SPAD array 24 relative to the optical path 40 of the pulsed optical beam 4 in order to detect the pulsed optical beam 4. For example, aligning the SPAD array 24 relative to the pulsed optical beam 4 may comprise:
(i) transmitting a pulsed optical alignment beam through the scattering medium 8, the pulsed optical alignment beam comprising a known alignment sequence of optical pulses;
(ii) aligning the SPAD array 24 so as to receive, on the plurality of SPADs 26 of the SPAD array 24, light from a corresponding plurality of different regions of the scattering medium 8 arranged along a trial optical path while the pulsed optical alignment beam is propagating through the scattering medium 8;
(iii) for each SPAD 26 of the SPAD array 24:
   detecting the light received on the SPAD 26 from the corresponding region of the scattering medium 8 as a function of time to generate a corresponding time-varying SPAD alignment signal;
   cross-correlating the SPAD alignment signal with the known alignment sequence of optical pulses of the pulsed optical alignment beam to generate a cross-correlated alignment signal; and
   determining a peak value of the cross-correlated alignment signal;
(iv) repeating steps (ii) and (iii) for a plurality of different trial optical paths; and
(v) aligning the SPAD array 24 so as to receive, on the plurality of SPADs 26 of the SPAD array 24, light from the corresponding plurality of different regions of the scattering medium 8 which are arranged along the trial optical path which optimises or maximises the peak value of one or more of the cross-correlated alignment signals.

The pulsed optical alignment beam may, for example, be the same as the pulsed optical calibration beam and/or the known alignment sequence of optical pulses may be the same as the known calibration sequence of optical pulses.

Aligning the SPAD array 24 relative to the pulsed optical beam 4 may allow the pulsed optical beam 4 to be detected. This may have applications for the detection of pulsed optical beams such as a pulsed laser beam of a laser range finder, a pulsed laser beam of a laser target designator, or a pulsed laser beam of a FSOC system such as a LOS FSOC system or a NLOS FSOC system.

One of ordinary skill in the art will also understand that various modifications are possible to any of the methods described above. For example, although the width of the image of the light scattered from the pulsed optical beam 4 on the SPAD array 24 is described as being comparable to, or equal to, a width of each SPAD 26, in other embodiments of the optical system 2, the width of the image of the light scattered from each optical pulse 42 on the SPAD array 24 may be greater than a width of each SPAD 26 of the SPAD array 24 i.e. the width of each SPAD 26 may be less than a width of the image of the light scattered from each optical pulse 42.

Although the length of the image of the light scattered from each optical pulse 42 on the SPAD array 24 is described as being comparable to, or equal to, a length of each SPAD 26 of the SPAD array 24 with reference to FIG. 5D, in other embodiments of the optical system 2, the length of the image of the light scattered from each optical pulse 42 on the SPAD array 24 may be greater than a length of each SPAD 26 of the SPAD array 24 i.e. the length of each SPAD 26 may be shorter than the length of the image of the light scattered from each optical pulse 42. In effect, this may mean that an image of the light scattered from each optical pulse 42 is incident simultaneously on more than one of the SPADs 26 of the SPAD array 24. However, since it is technically more difficult to implement smaller SPADs 26, reducing the length of each SPAD 26 relative to the length of the image of the light scattered from each optical pulse 42 may be a waste of engineering effort.

Although the optical receiver 20 is described above as including a SPAD array 24, in other embodiments, the optical receiver 20 may include a single-photon detector array of any kind. In further embodiments, the optical receiver 20 may include a photodetector array other than a single-photon detector array. For example, the optical receiver 20 may include a photodiode array such as a fast photodiode array. One of skill in the art will understand that, in contrast to an array of single-photon detectors which each generate a series of discrete electrical pulses on the arrival of photons on the single-photon detector, each photodetector of a photodetector array, such as each photodiode of a photodiode array, may generate a corresponding photodetector signal which varies continuously in time according to the intensity of the light received by the photodetector. Accordingly, when using a photodetector array such as a photodiode array in the optical receiver in place of the SPAD array 24, there is no need to cross-correlate a time window function like the time window function 44 with a summed photodetector signal to generate the optical receiver signal representative of the time-varying intensity of the pulsed optical beam. Specifically, when using a photodetector array such as a photodiode array in the optical receiver in place of the SPAD array 24, the method may comprise detecting the scattered light received on each photodetector from the corresponding region of the scattering medium as a function of time so as to generate a corresponding time-varying photodetector signal, and using the plurality of photodetector signals to determine a time-varying optical receiver signal representative of a time-varying intensity of the pulsed optical beam. Moreover, using the plurality of photodetector signals to determine the optical receiver signal may comprise applying one or more time-shifts to the plurality of photodetector signals to compensate the plurality of photodetector signals for differences between the arrival times of light scattered from the different regions of the scattering medium onto the different photodetectors of the photodetector array. For example, applying the one or more time-shifts to the plurality of photodetector signals to compensate the plurality of photodetector signals for differences between the arrival times of light from the different regions of the scattering medium onto the different photodetectors of the photodetector array may comprise selecting one of the photodetector signals as a reference photodetector signal and applying a different time-shift to each of the one or more other photodetector signals so as to generate one or more time-shifted photodetector signals. Using the plurality of photodetector signals to determine the optical receiver signal may further comprise adding the reference photodetector signal and the one or more time-shifted photodetector signals together so as to generate a time-varying summed photodetector signal, wherein the summed photodetector signal is the optical receiver signal representative of the time-varying intensity of the pulsed optical beam.

Although the photodetector array of the optical receiver 20 comprises a linear array of photodetectors in the form of a linear array 24 of SPADs 26, in other embodiments, the photodetector array may comprise a 2D array of photodetectors. Use of a 2D array of photodetectors may help to align the photodetector array relative to the pulsed optical beam, for example by relaxing the alignment tolerances between the photodetector array and the pulsed optical beam. In the case, the 2D photodetector array does not need to be aligned to the laser beam with precision but instead it just needs to be determined which photodetectors are collecting light from the pulsed optical beam, and which are not, so that the photodetector signals from the correct photodetectors can be combined to generate the time-varying optical receiver signal which is representative of the time-varying intensity of the pulsed optical beam.

Although the optical receiver is described above as including an imaging system in the form of the lens 28, in an alternative embodiment, any kind of imaging system may be used. For example, the imaging system may comprise one or more lenses and/or one or more curved mirrors. In another embodiment, the optical receiver may not include an imaging system of any kind. For example, the optical receiver may include one or more pinhole apertures rather than an imaging system.

The optical transmitter 6 may generate pulses of UV-B light or pulses of UV-A light or pulses of visible light or pulses of IR light such as pulses of near-IR light, short-wavelength IR light, or mid-IR light and the optical receiver may be configured accordingly. Use of a pulsed optical beam comprising UV-B light or UV-A light or visible light or IR light may allow communications over greater distances than the use of a pulsed optical beam of UV-C light. Use of a pulsed optical beam comprising UV-B light, UV-A light, visible light or IR light may result in an increased fraction of scattered light being Mie scattering which is more directional than the scattering which occurs when using UV-C light, thereby making it harder for an adversary to detect the pulsed near-IR optical beam.

The method may comprise modulating a direction of the pulsed optical beam. A potential advantage of doing this includes transmitting more information. This may also make it harder for an adversary to detect or intercept a communication. For example, the method may comprise modulating a pitch of the pulsed optical beam by angling the pulsed optical beam upwardly or downwardly. This may, for example, be advantageous where the pulsed optical beam passes directly over the top of the optical receiver. Angling the pulsed optical beam slightly up or down will have little effect upon the time-varying optical receiver signal representative of the time-varying intensity of the pulsed optical beam detected at the optical receiver because the image of the pulsed optical beam will stay in the same place on an image plane of the optical receiver, and there will be a very small variation in the timing of the received scattered light which could either be ignored if it is small enough, or compensated for in the analysis of the time-varying optical receiver signal. However, an adversary that is attempting to detect or intercept the communication will see a moving pulsed optical beam (unless they are on a direct line between the optical transmitter and the optical receiver), and this will make it harder to detect or intercept the signal because the adversary's optical receiver would have to compensate for the motion of the pulsed optical beam, whereas the legitimate optical receiver of the communication does not have to compensate for the motion of the pulsed optical beam.

The method may comprise modulating a yaw of the pulsed optical beam. Again, consider a situation where the pulsed optical beam passes directly over the top of the optical receiver. If the yaw of the pulsed optical beam is modulated, the optical receiver will see the pulsed optical beam moving on the image plane. If the optical receiver has a 2D photodetector array then both the timing of the optical pulses and the direction of the optical pulses can be recorded.

The method may comprise using the direction of the pulsed optical beam to encode additional information.

The method may comprise transmitting one or more additional optical beams which are additional to the pulsed optical communication beam used for communication.

For example, method may comprise transmitting additional optical beams to the left and/or right of the pulsed optical communication beam, wherein the pulsed optical communication beam passes directly over the top of the optical receiver. The legitimate optical receiver can ignore these additional beams, as their images fall upon different locations on the image plane in which the photodetector array is located. However, an adversary that is far enough away from a direct line between the optical transmitter and the optical receiver will receive scattered light from both the pulsed optical communication beam and these additional optical beams upon the same part of the image plane of the adversary's optical receiver. This reduces the signal to background light ratio for the adversary's optical receiver (where the additional optical beams are considered to produce background light in this case). The method may comprise deliberately modulating a direction of, and/or encoding data on, the additional optical beams to produce a signal that is confusing for an adversary trying to intercept the signal, for example with a similar type of modulation but different transmitted data - so that the adversary's optical receiver cannot tell which light came from the pulsed optical communication beam and which light came from the additional optical beams.

The method may comprise modulating a direction of the pulsed optical beam using a plurality of pulsed optical sources, wherein each pulsed optical source is configured to transmit a corresponding pulsed optical beam in a different direction at a different time. For example, an array of optical sources may be placed one focal length away from a collimating lens.

Additionally or alternatively, the direction of the pulsed optical beam may be modulated using a fast-moving mirror.

Additionally or alternatively, the direction of the pulsed optical beam may be modulated using a fast optical switch to direct light to different outputs, each of which transmits the pulsed beam in a corresponding different direction.

Additionally or alternatively, the method may comprise modulating a divergence of the pulsed optical beam, for example using an elliptical lens.

The method may comprise using Wavelength Division Multiplexing (WDM) to increase the transmitted data rate. Specifically, the pulsed optical beam may comprise a plurality of different carrier wavelengths with a different stream of data encoded on each carrier wavelength and the method may comprise separating the different carrier wavelengths onto different photodetectors. The optical receiver may, for example, include a dispersive element such as a prism or diffraction grating for this purpose.

Although the disclosure has been described in terms of preferred embodiments as set forth above, it should be understood that these embodiments are illustrative only and that the claims are not limited to those embodiments. Those skilled in the art will be able to make modifications and alternatives to the described embodiments in view of the disclosure which are contemplated as falling within the scope of the appended claims.

The skilled person will understand that in the preceding description and appended claims, positional terms such as 'above', 'along', 'side', etc. are made with reference to conceptual illustrations, such as those shown in the appended drawings. These terms are used for ease of reference but are not intended to be of limiting nature. These terms are therefore to be understood as referring to an object when in an orientation as shown in the accompanying drawings.

Use of the term "comprising" when used in relation to a feature of an embodiment of the present disclosure does not exclude other features or steps. Use of the term "a" or "an" when used in relation to a feature of an embodiment of the present disclosure does not exclude the possibility that the embodiment may include a plurality of such features.

The use of reference signs in the claims should not be construed as limiting the scope of the claims.

## Claims

1. A method for use in detecting a pulsed optical beam (4) comprising a plurality of optical pulses (42) when the pulsed optical beam (4) is transmitted through a scattering medium (8), wherein the pulsed optical beam (4) comprises UV-B light, UV-A light, visible light, or infra-red, IR, light, and wherein the method comprises:
using a plurality of photodetectors (26) of a photodetector array (24) to detect light which is scattered progressively from the same optical pulse (42) as the optical pulse (42) propagates through a plurality of regions of the scattering medium (8) and which is then received progressively on different photodetectors (26) of the photodetector array (24);
detecting the scattered light received on each photodetector (26) from the corresponding region of the scattering medium (8) as a function of time so as to generate a corresponding time-varying photodetector signal; and
using the plurality of photodetector signals to determine a time-varying optical receiver signal representative of a time-varying intensity of the pulsed optical beam (4),
wherein using the plurality of photodetector signals to determine the optical receiver signal comprises:
selecting one of the photodetector signals as a reference photodetector signal;
applying a different time-shift to each of the one or more other photodetector signals so as to generate one or more time-shifted photodetector signals;
adding the reference photodetector signal and the one or more time-shifted photodetector signals together so as to generate a time-varying summed photodetector signal; and
cross-correlating a time window function (44) with the summed photodetector signal to generate the optical receiver signal representative of the time-varying intensity of the pulsed optical beam (4), wherein the time window function (44) has a duration which is selected to time-resolve the arrival of many photons of background light from the arrival of photons of light which are scattered from each optical pulse (42) and received on the photodetector array (24) and/or which is selected to match an arrival period of light which is scattered from each optical pulse (42) and received on the photodetector array (24); or
wherein using the plurality of photodetector signals to determine the optical receiver signal comprises:
cross-correlating different time-shifted time window functions (70) with the different photodetector signals to generate a plurality of time-shifted cross-correlated photodetector signals; and
adding the plurality of time-shifted cross-correlated photodetector signals so as to generate a time-varying summed photodetector signal, wherein the time-varying summed photodetector signal is the optical receiver signal representative of the time-varying intensity of the pulsed optical beam (4), wherein each of the time-shifted time window functions (70) has a duration which is selected to time-resolve the arrival of many photons of background light from the arrival of photons of light which are scattered from each optical pulse (42) and received on the photodetector array (24) and/or which is selected to match an arrival period of light which is scattered from each optical pulse (42) and received on the photodetector array (24).

2. The method as claimed in claim 1, comprising using the plurality of photodetectors (26) of the photodetector array (24) to detect light which is scattered progressively from each optical pulse (42) as each optical pulse (42) propagates through the plurality of regions of the scattering medium (8) and which is then received progressively on different photodetectors (26) of the photodetector array (24).

3. The method as claimed in claim 1 or 2, comprising:
imaging each region of the plurality of regions of the scattering medium (8) onto a corresponding photodetector (26) of the photodetector array (24); and/or
imaging light scattered from each optical pulse (42) onto the photodetector array (24) so as to form an image of each optical pulse (42) on the photodetector array (24), wherein the image of the light scattered from each optical pulse (42) moves progressively along the different photodetectors (26) of the photodetector array (24) as a result of the propagation of each optical pulse (42) through the plurality of regions of the scattering medium (8).

4. The method as claimed in any preceding claim, wherein each of the one or more time window functions (44, 70) has a duration which is comparable to, or equal to, a duration of an arrival period of light which is scattered from each optical pulse (42) and received on the photodetector array (24).

5. The method as claimed in any preceding claim, comprising determining the different time-shifts associated with the different photodetectors (26) according to a speed at which the light scattered from the different regions of the scattering medium (8) moves across the different photodetectors (26) of the photodetector array (24), and optionally
wherein determining the different time-shifts associated with the different photodetectors (26) comprises:
transmitting a pulsed optical calibration beam through the scattering medium (8), the pulsed optical calibration beam comprising a known calibration sequence of optical pulses; and
for each photodetector (26) of the photodetector array (24):
detecting light which is scattered from the pulsed optical calibration beam as the pulsed optical calibration beam propagates through the corresponding plurality of different regions of the scattering medium (8) and received on the photodetector (26) to generate a corresponding time-varying photodetector calibration signal;
cross-correlating the photodetector calibration signal with the known calibration sequence of optical pulses of the pulsed optical calibration beam to generate a cross-correlated calibration signal; and
determining the time-shift for the photodetector (26) from a timing of a peak value of the cross-correlated calibration signal.

6. The method as claimed in any preceding claim, comprising aligning the photodetector array (24) relative to the pulsed optical beam (4) so that the plurality of photodetectors (26) of the photodetector array (24) are capable of receiving light which is scattered from the pulsed optical beam (4) as the pulsed optical beam (4) propagates through the corresponding plurality of regions of the scattering medium (8), and optionally
wherein aligning the photodetector array (24) relative to the pulsed optical beam (4) comprises:
(i) transmitting a pulsed optical alignment beam through the scattering medium (8), the pulsed optical alignment beam comprising a known alignment sequence of optical pulses;
(ii) aligning the photodetector array (24) so as to receive, on the plurality of photodetectors (26) of the photodetector array (24), light from a corresponding plurality of different regions of the scattering medium (8) arranged along a trial optical path while the pulsed optical alignment beam is propagating through the scattering medium (8);
(iii) for each photodetector (26) of the photodetector array (24):
detecting the light received on the photodetector (26) from the corresponding region of the scattering medium (8) as a function of time to generate a corresponding time-varying photodetector alignment signal;
cross-correlating the photodetector alignment signal with the known alignment sequence of optical pulses of the pulsed optical alignment beam to generate a cross-correlated alignment signal; and
determining a peak value of the cross-correlated alignment signal;
(iv) repeating steps (ii) and (iii) for a plurality of different trial optical paths; and
(v) aligning the photodetector array (24) so as to receive, on the plurality of photodetectors (26) of the photodetector array (24), light from the corresponding plurality of different regions of the scattering medium (8) which are arranged along the trial optical path which optimises or maximises the peak value of one or more of the cross-correlated alignment signals.

7. The method as claimed in any preceding claim, wherein at least one of:
the photodetector array (24) is arranged relative to the pulsed optical beam (4) so that a length of the image of the light scattered from each optical pulse (42) on the photodetector array (24) is greater than, or comparable to, or equal to, a length of each photodetector (26);
the photodetector array (24) is arranged relative to the pulsed optical beam (4) so that a width of the image of the light scattered from the pulsed optical beam (4) on the photodetector array (24) is greater than, or comparable to, or equal to, a width of each photodetector (26); or
the method comprises spectrally filtering light received from the scattering medium (8) before the light is incident on the plurality of photodetectors (26) of the photodetector array (24) so as to remove background light at a wavelength which falls outside a spectral bandwidth of the pulsed optical beam (8).

8. A method for non-line-of-sight free-space optical communications comprising:
transmitting a pulsed optical beam (4) through the scattering medium (8), the pulsed optical beam (4) comprising a plurality of optical pulses (42), wherein the plurality of optical pulses (42) of the pulsed optical beam (4) are configured so as to carry or encode data or information; and
the method for use in detecting a pulsed optical beam (4) as claimed in any preceding claim; and
extracting or decoding the data or information carried by, or encoded in, the plurality of optical pulses (42) from the determined time-varying optical receiver signal.

9. The method as claimed in claim 8, wherein the plurality of optical pulses (42) of the pulsed optical beam (4) are configured to carry or encode the data or information according to a modulation or encoding scheme having a peak to average power ratio of 100 or more, 1,000 or more or 10,000 or more, and/or
wherein the data or information is carried or encoded using at least one of:
a pulse analogue modulation method such as Pulse Position Modulation, PPM, Pulse Amplitude Modulation, PAM, or Pulse Width Modulation, PWM; and
a pulse code modulation, PCM, method such as on/off keying or return-to-zero signalling.

10. The method as claimed in claim 8 or 9, comprising at least one of:
modulating a direction of the pulsed optical beam (4);
transmitting one or more additional optical beams which are additional to the pulsed optical beam (4) used for communication;
modulating a direction of, and/or encoding data on, the one or more additional optical beams;
modulating a direction of the pulsed optical beam (4) using a plurality of pulsed optical sources, wherein each pulsed optical source is configured to transmit a corresponding pulsed optical beam in a different direction at a different time;
modulating a divergence of the pulsed optical beam (4); or
using Wavelength Division Multiplexing, WDM, to increase the transmitted data rate, for example wherein the pulsed optical beam (4) comprises a plurality of different carrier wavelengths with a different stream of data encoded on each carrier wavelength and wherein the method comprises separating the different carrier wavelengths onto different photodetectors (26).

11. A method for determining one or more properties of a scattering medium (8), comprising:
transmitting a pulsed optical beam (4) through the scattering medium (8), the pulsed optical beam (4) comprising a plurality of optical pulses (42) having a known probe sequence;
the method for use in detecting a pulsed optical beam (4) as claimed in any one of claims 1 to 7;
detecting the scattered light received on each photodetector (26) from the corresponding region of the scattering medium (8) as a function of time so as to generate a corresponding time-varying photodetector signal;
using the plurality of photodetector signals to determine a time-varying optical receiver signal representative of a time-varying intensity of the pulsed optical beam (4); and
using the known probe sequence and the determined time-varying optical receiver signal to determine one or more properties of the scattering medium (8).

12. An optical receiver (20) for use in detecting a pulsed optical beam (4) which comprises a plurality of optical pulses (42) when the pulsed optical beam (4) is transmitted through a scattering medium (8), wherein the pulsed optical beam (4) comprises UV-B light, UV-A light, visible light, or infra-red, IR, light, and wherein the optical receiver (20) comprises:
a photodetector array (24) which includes a plurality of photodetectors (26),
wherein the optical receiver (20) is arranged so that the plurality of photodetectors (26) of the photodetector array (24) detect light which is scattered progressively from the same optical pulse (42) as the optical pulse (42) propagates through a plurality of regions of the scattering medium (8) and which is then received progressively on different photodetectors (26) of the photodetector array (24), and
wherein the optical receiver (20) is configured for:
detecting the scattered light received on each photodetector (26) from the corresponding region of the scattering medium (8) as a function of time so as to generate a corresponding time-varying photodetector signal; and
using the plurality of photodetector signals to determine a time-varying optical receiver signal representative of a time-varying intensity of the pulsed optical beam,
wherein using the plurality of photodetector signals to determine the optical receiver signal comprises:
selecting one of the photodetector signals as a reference photodetector signal;
applying a different time-shift to each of the one or more other photodetector signals so as to generate one or more time-shifted photodetector signals;
adding the reference photodetector signal and the one or more time-shifted photodetector signals together so as to generate a time-varying summed photodetector signal; and
cross-correlating a time window function (44) with the summed photodetector signal to generate the optical receiver signal representative of the time-varying intensity of the pulsed optical beam (4), wherein the time window function (44) has a duration which is selected to time-resolve the arrival of many photons of background light from the arrival of photons of light which are scattered from each optical pulse (42) and received on the photodetector array (24) and/or which is selected to match an arrival period of light which is scattered from each optical pulse (42) and received on the photodetector array (24); or
wherein using the plurality of photodetector signals to determine the optical receiver signal comprises:
cross-correlating different time-shifted time window functions (70) with the different photodetector signals to generate a plurality of time-shifted cross-correlated photodetector signals; and
adding the plurality of time-shifted cross-correlated photodetector signals so as to generate a time-varying summed photodetector signal, wherein the time-varying summed photodetector signal is the optical receiver signal representative of the time-varying intensity of the pulsed optical beam (4), wherein each of the time-shifted time window functions (70) has a duration which is selected to time-resolve the arrival of many photons of background light from the arrival of photons of light which are scattered from each optical pulse (42) and received on the photodetector array (24) and/or which is selected to match an arrival period of light which is scattered from each optical pulse (42) and received on the photodetector array (24).

13. An optical system (2) comprising:
the optical receiver (20) as claimed in claim 12; and
an optical transmitter (6) for transmitting the pulsed optical beam (4) through the scattering medium (8) to thereby cause light from each optical pulse (42) to be scattered by the scattering medium (8) when each optical pulse (42) propagates through the plurality of different regions of the scattering medium (8).

14. The method as claimed in any one of claims 1 to 11, the optical receiver (20) as claimed in claim 12 or the optical system (2) as claimed in claim 13, wherein at least one of:
the photodetector array (24) comprises a linear array of photodetectors (26) or a 2D array of photodetectors;
the photodetector array (24) comprises an array of single-photon detectors such as an array of single-photon avalanche diodes, SPADs, an array of Silicon Photomultipliers, SiPM, or an array of Multi Pixel Photon Counters, MPPC, or an array of photomultiplier tubes, PMT; and
the photodetector array (24) comprises an array of photodiodes.

15. The method as claimed in any one of claims 1 to 11, the optical receiver (20) as claimed in claim 12, or the optical system (2) as claimed in claim 13, wherein:
the pulsed optical beam (4) comprises near-IR light, short-wavelength IR light or mid-IR light, and/or
the pulsed optical beam (4) comprises pulsed coherent light such as pulsed laser light.

## Patentansprüche

1. Verfahren zur Verwendung beim Erfassen eines gepulsten optischen Strahls (4), der eine Vielzahl von optischen Pulsen (42) umfasst, wenn der gepulste optische Strahl (4) durch ein Streumedium (8) ausgesendet wird, wobei der gepulste optische Strahl (4) UV-B-Licht, UV-A-Licht, sichtbares Licht oder Infrarotlicht, IR, umfasst, und wobei das Verfahren umfasst:
Verwenden einer Vielzahl von Photodetektoren (26) eines Photodetektorarrays (24) zum Erfassen von Licht, das vom gleichen optischen Puls (42) sukzessive gestreut wird, während sich der optische Puls (42) durch eine Vielzahl von Bereichen des Streumediums (8) ausbreitet, und das dann sukzessive auf unterschiedlichen Photodetektoren (26) des Photodetektorarrays (24) empfangen wird;
Erfassen des auf jedem Photodetektor (26) aus dem entsprechenden Bereich des Streumediums (8) empfangenen Streulichts als eine Funktion der Zeit, um ein entsprechendes zeitlich veränderliches Photodetektorsignal zu erzeugen; und
Verwenden der Vielzahl von Photodetektorsignalen, um ein zeitlich veränderliches optisches Empfängersignal zu bestimmen, das repräsentativ für eine zeitlich veränderliche Intensität des gepulsten optischen Strahls (4) ist,
wobei Verwenden der Vielzahl von Photodetektorsignalen zum Bestimmen des optischen Empfängersignals umfasst:
Auswählen eines der Photodetektorsignale als ein Referenzphotodetektorsignal;
Anwenden einer unterschiedlichen Zeitverschiebung auf jedes der einen oder mehreren anderen Photodetektorsignale, um ein oder mehrere zeitverschobene Photodetektorsignale zu erzeugen;
Hinzufügen des Referenzphotodetektorsignals und des einen oder der mehreren zeitverschobenen Photodetektorsignale, um ein zeitlich veränderliches summiertes Photodetektorsignal zu erzeugen; und
Kreuzkorrelieren einer Zeitfensterfunktion (44) mit dem summierten Photodetektorsignal, um das optische Empfängersignal zu erzeugen, das repräsentativ für die zeitlich veränderliche Intensität des gepulsten optischen Strahls (4) ist, wobei die Zeitfensterfunktion (44) eine Dauer aufweist, die so gewählt ist, dass die Ankunft vieler Photonen von Hintergrundlicht von der Ankunft der Photonen des Lichts, die von jedem optischen Puls (42) gestreut und auf dem Photodetektorarray (24) empfangen werden, zeitlich aufgelöst wird, und/oder die so gewählt ist, dass sie mit einer Ankunftsperiode von Licht übereinstimmt, das von jedem optischen Puls (42) gestreut und auf dem Photodetektorarray (24) empfangen wird; oder
wobei Verwenden der Vielzahl von Photodetektorsignalen zum Bestimmen des optischen Empfängersignals umfasst:
Kreuzkorrelieren unterschiedlicher zeitverschobener Zeitfensterfunktionen (70) mit den unterschiedlichen Photodetektorsignalen, um eine Vielzahl von zeitverschobenen kreuzkorrelierten Photodetektorsignalen zu erzeugen; und
Hinzufügen der Vielzahl von zeitverschobenen kreuzkorrelierten Photodetektorsignalen, um ein zeitlich veränderliches summiertes Photodetektorsignal zu erzeugen, wobei das zeitlich veränderliche summierte Photodetektorsignal das optische Empfängersignal ist, das repräsentativ für die zeitlich veränderliche Intensität des gepulsten optischen Strahls (4) ist, wobei jede der zeitverschobenen Zeitfensterfunktionen (70) eine Dauer aufweist, die so gewählt ist, dass die Ankunft vieler Photonen von Hintergrundlicht von der Ankunft der Photonen des Lichts, die von jedem optischen Puls (42) gestreut und auf dem Photodetektorarray (24) empfangen werden, zeitlich aufgelöst wird, und/oder die so gewählt ist, dass sie mit einer Ankunftsperiode von Licht übereinstimmt, das von jedem optischen Puls (42) gestreut und auf dem Photodetektorarray (24) empfangen wird.

2. Verfahren nach Anspruch 1, umfassend Verwenden der Vielzahl von Photodetektoren (26) des Photodetektorarrays (24) zum Erfassen von Licht, das von jedem optischen Puls (42) sukzessive gestreut wird, während sich jeder optische Puls (42) durch die Vielzahl von Bereichen des Streumediums (8) ausbreitet, und das dann sukzessive auf unterschiedlichen Photodetektoren (26) des Photodetektorarrays (24) empfangen wird.

3. Verfahren nach Anspruch 1 oder 2, umfassend:
Abbilden jedes Bereichs der Vielzahl von Bereichen des Streumediums (8) auf einen entsprechenden Photodetektor (26) des Photodetektorarrays (24); und/oder
Abbilden eines von jedem optischen Puls (42) gestreuten Lichts auf das Photodetektorarray (24), um ein Bild jedes optischen Pulses (42) auf dem Photodetektorarray (24) zu bilden, wobei das Bild des von jedem optischen Puls (42) gestreuten Lichts sich dabei infolge der Ausbreitung jedes optischen Pulses (42) durch die Vielzahl von Bereichen des Streumediums (8) sukzessive entlang der unterschiedlichen Photodetektoren (26) des Photodetektorarrays (24) bewegt.

4. Verfahren nach einem vorstehenden Anspruch, wobei jede der einen oder mehreren Zeitfensterfunktionen (44, 70) eine Dauer aufweist, die vergleichbar mit oder gleich einer Dauer einer Ankunftsperiode von Licht ist, das von jedem optischen Puls (42) gestreut und auf dem Photodetektorarray (24) empfangen wird.

5. Verfahren nach einem vorstehenden Anspruch, umfassend Bestimmen der unterschiedlichen Zeitverschiebungen, die den unterschiedlichen Photodetektoren (26) zugeordnet sind, gemäß einer Geschwindigkeit, mit der sich das von den unterschiedlichen Bereichen des Streumediums (8) gestreute Licht durch die unterschiedlichen Photodetektoren (26) des Photodetektorarrays (24) bewegt, und optional
wobei Bestimmen der unterschiedlichen Zeitverschiebungen, die den unterschiedlichen Photodetektoren (26) zugeordnet sind, umfasst:
Aussenden eines gepulsten optischen Kalibrierstrahls durch das Streumedium (8), wobei der gepulste optische Kalibrierstrahl eine bekannte Kalibriersequenz von optischen Pulsen umfasst; und
für jeden Photodetektor (26) des Photodetektorarrays (24):
Erfassen von Licht, das vom gepulsten optischen Kalibrierstrahl gestreut wird, während sich der gepulste optische Kalibrierstrahl durch die entsprechende Vielzahl von unterschiedlichen Bereichen des Streumediums (8) ausbreitet und auf dem Photodetektor (26) empfangen wird, um ein entsprechendes zeitlich veränderliches Photodetektor-Kalibriersignal zu erzeugen;
Kreuzkorrelieren des Photodetektor-Kalibriersignals mit der bekannten Kalibriersequenz optischer Pulse des gepulsten optischen Kalibrierstrahls, um ein kreuzkorreliertes Kalibriersignal zu erzeugen; und
Bestimmen der Zeitverschiebung für den Photodetektor (26) aus einem Zeitpunkt eines Spitzenwerts des kreuzkorrelierten Kalibrierungssignals.

6. Verfahren nach einem vorstehenden Anspruch, umfassend Ausrichten des Photodetektorarrays (24) relativ zum gepulsten optischen Strahl (4), sodass die Vielzahl von Photodetektoren (26) des Photodetektorarrays (24) in der Lage sind, Licht zu empfangen, das vom gepulsten optischen Strahl (4) gestreut wird, während sich der gepulste optische Strahl (4) durch die entsprechende Vielzahl von Bereichen des Streumediums (8) ausbreitet, und optional
wobei Ausrichten des Photodetektorarrays (24) relativ zum gepulsten optischen Strahl (4) umfasst:
(i) Aussenden eines gepulsten optischen Ausrichtungsstrahls durch das Streumedium (8), wobei der gepulste optische Ausrichtungsstrahl eine bekannte Ausrichtungssequenz von optischen Pulsen umfasst;
(ii) Ausrichten des Photodetektorarrays (24), um auf die Vielzahl von Photodetektoren (26) des Photodetektorarrays (24) Licht aus einer entsprechenden Vielzahl von unterschiedlichen Bereichen des Streumediums (8) zu empfangen, die entlang eines optischen Testpfads angeordnet sind, während sich der gepulste optische Ausrichtungsstrahl durch das Streumedium (8) ausbreitet;
(iii) für jeden Photodetektor (26) des Photodetektorarrays (24):
Erfassen des auf dem Photodetektor (26) aus dem entsprechenden Bereich des Streumediums (8) empfangenen Lichts als eine Funktion der Zeit, um ein entsprechendes zeitlich veränderliches Photodetektorausrichtungssignal zu erzeugen; und
Kreuzkorrelieren des Photodetektorausrichtungssignals mit der bekannten Ausrichtungssequenz optischer Pulse des gepulsten optischen Ausrichtungsstrahls, um ein kreuzkorreliertes Ausrichtungssignal zu erzeugen; und
Bestimmen eines Spitzenwerts des kreuzkorrelierten Ausrichtungssignals;
(iv) Wiederholen der Schritte (ii) und (iii) für eine Vielzahl von unterschiedlichen optischen Testpfaden; und
(v) Ausrichten des Photodetektorarrays (24), um auf die Vielzahl von Photodetektoren (26) des Photodetektorarrays (24) Licht aus der entsprechenden Vielzahl von unterschiedlichen Bereichen des Streumediums (8) zu empfangen, die entlang des optischen Testpfads angeordnet sind, der den Spitzenwert eines oder mehrerer der kreuzkorrelierten Ausrichtungssignale optimiert oder maximiert.

7. Verfahren nach einem vorstehenden Anspruch, wobei mindestens eines des Folgenden zutrifft:
das Photodetektorarray (24) ist relativ zum gepulsten optischen Strahl (4) so angeordnet, dass eine Länge des Bilds des von jedem optischen Puls (42) auf das Photodetektorarray (24) gestreuten Lichts größer als, vergleichbar mit oder gleich einer Länge jedes Photodetektors (26) ist;
das Photodetektorarray (24) ist relativ zum gepulsten optischen Strahl (4) so angeordnet, dass eine Länge des Bilds des von dem gepulsten optischen Strahl (4) auf das Photodetektorarray (24) gestreuten Lichts größer als, vergleichbar mit oder gleich einer Breite jedes Photodetektors (26) ist; oder
das Verfahren umfasst spektrales Filtern des vom Streumedium (8) empfangenen Lichts, bevor das Licht auf die Vielzahl von Photodetektoren (26) des Photodetektorarrays (24) trifft, um Hintergrundlicht bei einer Wellenlänge zu entfernen, die außerhalb einer spektralen Bandbreite des gepulsten optischen Strahls (8) liegt.

8. Verfahren für optische Freiraumkommunikation ohne Sichtverbindung, umfassend:
Aussenden eines gepulsten optischen Strahls (4) durch das Streumedium (8), wobei der gepulste optische Strahl (4) eine Vielzahl von optischen Pulsen (42) umfasst, wobei die Vielzahl von optischen Pulsen (42) des gepulsten optischen Strahls (4) so konfiguriert sind, dass sie Daten oder Informationen übertragen oder codieren; und
das Verfahren zur Verwendung beim Erfassen eines gepulsten optischen Strahls (4) nach einem vorstehenden Anspruch; und
Extrahieren oder Decodieren der Daten oder Informationen, die von der Vielzahl von optischen Pulsen (42) getragen oder in ihnen codiert sind, aus dem bestimmten zeitlich veränderlichen optischen Empfängersignal.

9. Verfahren nach Anspruch 8, wobei die Vielzahl von optischen Pulsen (42) des gepulsten optischen Strahls (4) so konfiguriert sind, dass sie die Daten oder Informationen gemäß einem Modulations- oder Codierungsschema, das ein Verhältnis von Spitzen- zu Durchschnittsleistung von 100 oder mehr, 1.000 oder mehr oder 10.000 oder mehr aufweist, übertragen oder codieren, und/oder
wobei die Daten oder Informationen unter Verwendung mindestens eines des Folgenden übertragen oder codiert werden:
einem Puls-Analogmodulationsverfahren wie Pulspositionsmodulation, PPM, Pulsamplitudenmodulation, PAM, oder Pulsweitenmodulation, PWM; und
einem Pulscodemodulationsverfahren, PCM, wie Ein/Aus-Tastensteuerung oder Rückkehr-zu-Null-Signalisierung.

10. Verfahren nach Anspruch 8 oder 9, umfassend mindestens eines des Folgenden:
Modulieren einer Richtung des gepulsten optischen Strahls (4);
Aussenden eines oder mehrerer zusätzlicher optischer Strahlen, die zusätzlich zu dem für die Kommunikation verwendeten gepulsten optischen Strahl (4) vorhanden sind;
Modulieren einer Richtung von und/oder Codierung von Daten auf einem oder mehreren zusätzlichen optischen Strahlen;
Modulieren einer Richtung des gepulsten optischen Strahls (4) unter Verwendung einer Vielzahl von gepulsten optischen Quellen, wobei jede gepulste optische Quelle so konfiguriert ist, dass sie einen entsprechenden gepulsten optischen Strahl zu einem unterschiedlichen Zeitpunkt in eine unterschiedliche Richtung aussendet;
Modulieren einer Divergenz des gepulsten optischen Strahls (4); oder
Verwenden von Wellenlängenmultiplex, WDM, um die ausgesendete Datenrate zu erhöhen, beispielsweise wobei der gepulste optische Strahl (4) eine Vielzahl von unterschiedlichen Trägerwellenlängen mit einem unterschiedlichen Datenstrom umfasst, der auf jeder Trägerwellenlänge codiert ist, und wobei das Verfahren Trennen der unterschiedlichen Trägerwellenlängen auf unterschiedliche Photodetektoren (26) umfasst.

11. Verfahren zum Bestimmen einer oder mehrerer Eigenschaften eines Streumediums (8), umfassend:
Aussenden eines gepulsten optischen Strahls (4) durch das Streumedium (8), wobei der gepulste optische Strahl (4) eine Vielzahl von optischen Pulsen (42) umfasst, die eine bekannte Abtastsequenz aufweisen;
das Verfahren zur Verwendung beim Erfassen eines gepulsten optischen Strahls (4) nach einem der Ansprüche 1 bis 7;
Erfassen des auf jedem Photodetektor (26) aus dem entsprechenden Bereich des Streumediums (8) empfangenen Streulichts als eine Funktion der Zeit, um ein entsprechendes zeitlich veränderliches Photodetektorsignal zu erzeugen;
Verwenden der Vielzahl von Photodetektorsignalen, um ein zeitlich veränderliches optisches Empfängersignal zu bestimmen, das repräsentativ für eine zeitlich veränderliche Intensität des gepulsten optischen Strahls (4) ist; und
Verwenden der bekannten Abtastsequenz und des bestimmten zeitlich veränderlichen optischen Empfängersignals, um eine oder mehrere Eigenschaften des Streumediums (8) zu bestimmen.

12. Optischer Empfänger (20) zur Verwendung beim Erfassen eines gepulsten optischen Strahls (4), der eine Vielzahl von optischen Pulsen (42) umfasst, wenn der gepulste optische Strahl (4) durch ein Streumedium (8) ausgesendet wird, wobei der gepulste optische Strahl (4) UV-B-Licht, UV-A-Licht, sichtbares Licht oder Infrarotlicht, IR, umfasst, und wobei der optische Empfänger (20) umfasst:
ein Photodetektorarray (24), das eine Vielzahl von Photodetektoren (26) beinhaltet,
wobei der optische Empfänger (20) so angeordnet ist, dass die Vielzahl von Photodetektoren (26) des Photodetektorarrays (24) Licht erfassen, das vom gleichen optischen Puls (42) sukzessive gestreut wird, während sich der optische Puls (42) durch eine Vielzahl von Bereichen des Streumediums (8) ausbreitet, und das dann sukzessive auf unterschiedlichen Photodetektoren (26) des Photodetektorarrays (24) empfangen wird, und
wobei der optische Empfänger (20) konfiguriert ist zum:
Erfassen des auf jedem Photodetektor (26) aus dem entsprechenden Bereich des Streumediums (8) empfangenen Streulichts als eine Funktion der Zeit, um ein entsprechendes zeitlich veränderliches Photodetektorsignal zu erzeugen; und
Verwenden der Vielzahl von Photodetektorsignalen, um ein zeitlich veränderliches optisches Empfängersignal zu bestimmen, das repräsentativ für eine zeitlich veränderliche Intensität des gepulsten optischen Strahls ist,
wobei Verwenden der Vielzahl von Photodetektorsignalen zum Bestimmen des optischen Empfängersignals umfasst:
Auswählen eines der Photodetektorsignale als ein Referenzphotodetektorsignal;
Anwenden einer unterschiedlichen Zeitverschiebung auf jedes der einen oder mehreren anderen Photodetektorsignale, um ein oder mehrere zeitverschobene Photodetektorsignale zu erzeugen;
Hinzufügen des Referenzphotodetektorsignals und des einen oder der mehreren zeitverschobenen Photodetektorsignale, um ein zeitlich veränderliches summiertes Photodetektorsignal zu erzeugen; und
Kreuzkorrelieren einer Zeitfensterfunktion (44) mit dem summierten Photodetektorsignal, um das optische Empfängersignal zu erzeugen, das repräsentativ für die zeitlich veränderliche Intensität des gepulsten optischen Strahls (4) ist, wobei die Zeitfensterfunktion (44) eine Dauer aufweist, die so gewählt ist, dass die Ankunft vieler Photonen von Hintergrundlicht von der Ankunft der Photonen des Lichts, die von jedem optischen Puls (42) gestreut und auf dem Photodetektorarray (24) empfangen werden, zeitlich aufgelöst wird, und/oder die so gewählt ist, dass sie mit einer Ankunftsperiode von Licht übereinstimmt, das von jedem optischen Puls (42) gestreut und auf dem Photodetektorarray (24) empfangen wird; oder
wobei Verwenden der Vielzahl von Photodetektorsignalen zum Bestimmen des optischen Empfängersignals umfasst:
Kreuzkorrelieren unterschiedlicher zeitverschobener Zeitfensterfunktionen (70) mit den unterschiedlichen Photodetektorsignalen, um eine Vielzahl von zeitverschobenen kreuzkorrelierten Photodetektorsignalen zu erzeugen; und
Hinzufügen der Vielzahl von zeitverschobenen kreuzkorrelierten Photodetektorsignalen, um ein zeitlich veränderliches summiertes Photodetektorsignal zu erzeugen, wobei das zeitlich veränderliche summierte Photodetektorsignal das optische Empfängersignal ist, das repräsentativ für die zeitlich veränderliche Intensität des gepulsten optischen Strahls (4) ist, wobei jede der zeitverschobenen Zeitfensterfunktionen (70) eine Dauer aufweist, die so gewählt ist, dass die Ankunft vieler Photonen von Hintergrundlicht von der Ankunft der Photonen des Lichts, die von jedem optischen Puls (42) gestreut und auf dem Photodetektorarray (24) empfangen werden, zeitlich aufgelöst wird, und/oder die so gewählt ist, dass sie mit einer Ankunftsperiode von Licht übereinstimmt, das von jedem optischen Puls (42) gestreut und auf dem Photodetektorarray (24) empfangen wird.

13. Optisches System (2), umfassend:
den optischen Empfänger (20) nach Anspruch 12; und
einen optischen Sender (6) zum Aussenden des gepulsten optischen Strahls (4) durch das Streumedium (8), um dadurch Licht von jedem optischen Puls (42) zu veranlassen, durch das Streumedium (8) gestreut zu werden, wenn sich jeder optische Puls (42) durch die Vielzahl von unterschiedlichen Bereichen des Streumediums (8) ausbreitet.

14. Verfahren nach einem der Ansprüche 1 bis 11, der optische Empfänger (20) nach Anspruch 12 oder das optische System (2) nach Anspruch 13, wobei mindestens eines des Folgenden zutrifft:
das Photodetektorarray (24) umfasst ein lineares Array von Photodetektoren (26) oder ein 2D-Array von Photodetektoren;
das Photodetektorarray (24) umfasst ein Array von Einzelphotonendetektoren, wie ein Array von Einzelphoton-Avalanche-Dioden, SPADs, ein Array von Silizium-Photomultipliern, SiPM, oder ein Array von Multi-Pixel-Photonenzählern, MPPC, oder ein Array von Photomultiplierröhren, PMT; und
das Photodetektorarray (24) umfasst ein Array von Photodioden.

15. Verfahren nach einem der Ansprüche 1 bis 11, der optische Empfänger (20) nach Anspruch 12 oder das optische System (2) nach Anspruch 13, wobei:
der gepulste optische Strahl (4) Nah-IR-Licht, kurzwelliges IR-Licht oder mittelwelliges IR-Licht umfasst, und/oder
der gepulste optische Strahl (4) gepulstes kohärentes Licht umfasst, wie gepulstes Laserlicht.

## Revendications

1. Procédé pour une utilisation dans la détection d'un faisceau optique pulsé (4) comprenant une pluralité d'impulsions optiques (42) lorsque le faisceau optique pulsé (4) est transmis à travers un milieu diffusant (8), dans lequel le faisceau optique pulsé (4) comprend de la lumière UV-B, de la lumière UV-A, de la lumière visible ou de la lumière infrarouge, IR, et dans lequel le procédé comprend :
l'utilisation d'une pluralité de photodétecteurs (26) d'un réseau de photodétecteurs (24) pour détecter la lumière qui est diffusée progressivement par la même impulsion optique (42) lorsque l'impulsion optique (42) se propage à travers une pluralité de régions du milieu diffusant (8) et qui est ensuite reçue progressivement sur différents photodétecteurs (26) du réseau de photodétecteurs (24) ;
la détection de la lumière diffusée reçue par chaque photodétecteur (26) provenant de la région correspondante du milieu diffusant (8) en fonction du temps afin de générer un signal de photodétecteur variable dans le temps correspondant ; et
l'utilisation de la pluralité de signaux de photodétecteur pour déterminer un signal de récepteur optique variable dans le temps représentatif d'une intensité variable dans le temps du faisceau optique pulsé (4),
dans lequel l'utilisation de la pluralité de signaux de photodétecteur pour déterminer le signal de récepteur optique comprend :
la sélection de l'un des signaux de photodétecteur comme signal de photodétecteur de référence ;
l'application d'un décalage temporel différent à chacun des un ou plusieurs autres signaux de photodétecteur afin de générer un ou plusieurs signaux de photodétecteur décalés dans le temps ;
l'addition du signal de photodétecteur de référence et des un ou plusieurs signaux de photodétecteur décalés dans le temps afin de générer un signal de photodétecteur sommé variable dans le temps ; et
l'exécution d'une corrélation croisée d'une fonction de fenêtre temporelle (44) avec le signal de photodétecteur sommé pour générer le signal de récepteur optique représentatif de l'intensité variable dans le temps du faisceau optique pulsé (4), dans lequel la fonction de fenêtre temporelle (44) présente une durée qui est sélectionnée pour résoudre temporellement l'arrivée de nombreux photons de lumière de fond par rapport à l'arrivée de photons de lumière qui sont diffusés par chaque impulsion optique (42) et reçus sur le réseau de photodétecteurs (24) et/ou qui est sélectionnée pour correspondre à une période d'arrivée de la lumière qui est diffusée par chaque impulsion optique (42) et reçue sur le réseau de photodétecteurs (24) ; ou
dans lequel l'utilisation de la pluralité de signaux de photodétecteur pour déterminer le signal de récepteur optique comprend :
l'exécution d'une corrélation croisée de différentes fonctions de fenêtre temporelle décalées dans le temps (70) avec les différents signaux de photodétecteur pour générer une pluralité de signaux de photodétecteur corrélés de manière croisée et décalés dans le temps ; et
l'addition de la pluralité de signaux de photodétecteur corrélés de manière croisée et décalés dans le temps afin de générer un signal de photodétecteur sommé variable dans le temps, dans lequel le signal de photodétecteur sommé variable dans le temps est le signal de récepteur optique représentatif de l'intensité variable dans le temps du faisceau optique pulsé (4), dans lequel chacune des fonctions de fenêtre temporelle décalées dans le temps (70) présente une durée qui est sélectionnée pour résoudre temporellement l'arrivée de nombreux photons de lumière de fond par rapport à l'arrivée de photons de lumière qui sont diffusés par chaque impulsion optique (42) et reçus sur le réseau de photodétecteurs (24) et/ou qui est sélectionnée pour correspondre à une période d'arrivée de la lumière qui est diffusée par chaque impulsion optique (42) et reçue sur le réseau de photodétecteurs (24).

2. Procédé selon la revendication 1, comprenant l'utilisation de la pluralité de photodétecteurs (26) du réseau de photodétecteurs (24) pour détecter la lumière qui est diffusée progressivement par chaque impulsion optique (42) lorsque chaque impulsion optique (42) se propage à travers la pluralité de régions du milieu diffusant (8) et qui est ensuite reçue progressivement sur différents photodétecteurs (26) du réseau de photodétecteurs (24).

3. Procédé selon la revendication 1 ou 2, comprenant :
l'imagerie de chaque région de la pluralité de régions du milieu diffusant (8) sur un photodétecteur correspondant (26) du réseau de photodétecteurs (24) ; et/ou
l'imagerie de la lumière diffusée par chaque impulsion optique (42) sur le réseau de photodétecteurs (24) afin de former une image de chaque impulsion optique (42) sur le réseau de photodétecteurs (24), dans lequel l'image de la lumière diffusée par chaque impulsion optique (42) se déplace progressivement le long des différents photodétecteurs (26) du réseau de photodétecteurs (24) en raison de la propagation de chaque impulsion optique (42) à travers la pluralité de régions du milieu diffusant (8).

4. Procédé selon une quelconque revendication précédente, dans lequel chacune des une ou plusieurs fonctions de fenêtre temporelle (44, 70) présente une durée qui est comparable ou égale à une durée d'une période d'arrivée de la lumière qui est diffusée par chaque impulsion optique (42) et reçue sur le réseau de photodétecteurs (24).

5. Procédé selon une quelconque revendication précédente, comprenant la détermination des différents décalages temporels associés aux différents photodétecteurs (26) en fonction d'une vitesse à laquelle la lumière diffusée par les différentes régions du milieu diffusant (8) se déplace à travers les différents photodétecteurs (26) du réseau de photodétecteurs (24), et facultativement
dans lequel la détermination des différents décalages temporels associés aux différents photodétecteurs (26) comprend :
la transmission d'un faisceau d'étalonnage optique pulsé à travers le milieu diffusant (8), le faisceau d'étalonnage optique pulsé comprenant une séquence d'étalonnage connue d'impulsions optiques ; et
pour chaque photodétecteur (26) du réseau de photodétecteurs (24) :
la détection de la lumière qui est diffusée par le faisceau d'étalonnage optique pulsé lorsque le faisceau d'étalonnage optique pulsé se propage à travers la pluralité correspondante de différentes régions du milieu diffusant (8) et est reçu sur le photodétecteur (26) pour générer un signal d'étalonnage de photodétecteur variable dans le temps correspondant ;
l'exécution d'une corrélation croisée du signal d'étalonnage de photodétecteur avec la séquence d'étalonnage connue des impulsions optiques du faisceau d'étalonnage optique pulsé afin de générer un signal d'étalonnage corrélé de manière croisée ; et
la détermination du décalage temporel du photodétecteur (26) à partir d'un chronométrage d'une valeur de crête du signal d'étalonnage corrélé de manière croisée.

6. Procédé selon une quelconque revendication précédente, comprenant l'alignement du réseau de photodétecteurs (24) par rapport au faisceau optique pulsé (4) de sorte que la pluralité de photodétecteurs (26) du réseau de photodétecteurs (24) soient capables de recevoir la lumière qui est diffusée par le faisceau optique pulsé (4) lorsque le faisceau optique pulsé (4) se propage à travers la pluralité correspondante de régions du milieu diffusant (8), et facultativement
dans lequel l'alignement du réseau de photodétecteurs (24) par rapport au faisceau optique pulsé (4) comprend :
(i) la transmission d'un faisceau d'alignement optique pulsé à travers le milieu diffusant (8), le faisceau d'alignement optique pulsé comprenant une séquence d'alignement connue d'impulsions optiques ;
(ii) l'alignement du réseau de photodétecteurs (24) de manière à recevoir, sur la pluralité de photodétecteurs (26) du réseau de photodétecteurs (24), la lumière provenant d'une pluralité correspondante de régions différentes du milieu diffusant (8) agencées le long d'un chemin optique d'essai pendant que le faisceau d'alignement optique pulsé se propage à travers le milieu diffusant (8) ;
(iii) pour chaque photodétecteur (26) du réseau de photodétecteurs (24) :
la détection de la lumière reçue par le photodétecteur (26) provenant de la région correspondante du milieu diffusant (8) en fonction du temps afin de générer un signal d'alignement de photodétecteur variable dans le temps correspondant ;
l'exécution d'une corrélation croisée du signal d'alignement de photodétecteur avec la séquence d'alignement connue des impulsions optiques du faisceau d'alignement optique pulsé afin de générer un signal d'alignement corrélé de manière croisée ; et
la détermination d'une valeur de crête du signal d'alignement corrélé de manière croisée ;
(iv) la répétition des étapes (ii) et (iii) pour une pluralité de chemins optiques d'essai différents ; et
(v) l'alignement du réseau de photodétecteurs (24) de manière à recevoir, sur la pluralité de photodétecteurs (26) du réseau de photodétecteurs (24), la lumière provenant de la pluralité correspondante de régions différentes du milieu diffusant (8) qui sont agencées le long du chemin optique d'essai qui optimise ou maximise la valeur de crête d'un ou plusieurs des signaux d'alignement corrélés de manière croisée.

7. Procédé selon une quelconque revendication précédente, dans lequel au moins l'un parmi :
le réseau de photodétecteurs (24) est agencé par rapport au faisceau optique pulsé (4) de sorte qu'une longueur de l'image de la lumière diffusée par chaque impulsion optique (42) sur le réseau de photodétecteurs (24) soit supérieure, comparable ou égale à une longueur de chaque photodétecteur (26) ;
le réseau de photodétecteurs (24) est agencé par rapport au faisceau optique pulsé (4) de sorte qu'une largeur de l'image de la lumière diffusée par le faisceau optique pulsé (4) sur le réseau de photodétecteurs (24) soit supérieure, comparable ou égale à une largeur de chaque photodétecteur (26) ; ou
le procédé comprend le filtrage spectral de la lumière reçue du milieu diffusant (8) avant que la lumière ne soit incidente sur la pluralité de photodétecteurs (26) du réseau de photodétecteurs (24) afin d'éliminer la lumière de fond à une longueur d'onde qui se situe en dehors d'une bande passante spectrale du faisceau optique pulsé (8).

8. Procédé de communication optique en espace libre sans visée directe comprenant :
la transmission d'un faisceau optique pulsé (4) à travers le milieu diffusant (8), le faisceau optique pulsé (4) comprenant une pluralité d'impulsions optiques (42), dans lequel la pluralité d'impulsions optiques (42) du faisceau optique pulsé (4) sont configurées de manière à transporter ou à encoder des données ou des informations ; et
le procédé pour une utilisation dans la détection d'un faisceau optique pulsé (4) selon une quelconque revendication précédente ; et
l'extraction ou le décodage des données ou informations transportées par, ou encodées dans, la pluralité d'impulsions optiques (42) à partir du signal de récepteur optique variable dans le temps déterminé.

9. Procédé selon la revendication 8, dans lequel la pluralité d'impulsions optiques (42) du faisceau optique pulsé (4) sont configurées pour transporter ou encoder les données ou informations selon un schéma de modulation ou d'encodage présentant un rapport de puissance crête à moyenne de 100 ou plus, 1 000 ou plus ou 10 000 ou plus, et/ou
dans lequel les données ou informations sont véhiculées ou encodées au moyen d'au moins un parmi :
un procédé de modulation analogique d'impulsions telle que la modulation de position d'impulsion, PPM, la modulation d'amplitude d'impulsion, PAM, ou la modulation de largeur d'impulsion, PWM ; et
un procédé de modulation par impulsions et codage, MIC, telle que la modulation tout ou rien ou une signalisation de retour à zéro.

10. Procédé selon la revendication 8 ou 9, comprenant au moins une parmi :
la modulation d'une direction du faisceau optique pulsé (4) ;
la transmission d'un ou plusieurs faisceaux optiques supplémentaires qui s'ajoutent au faisceau optique pulsé (4) utilisé pour la communication ;
la modulation d'une direction des un ou plusieurs faisceaux optiques supplémentaires, et/ou l'encodage de données sur ceux-ci ;
la modulation d'une direction du faisceau optique pulsé (4) à l'aide d'une pluralité de sources optiques pulsées, dans lequel chaque source optique pulsée est configurée pour transmettre un faisceau optique pulsé correspondant dans une direction différente à un moment différent ;
la modulation d'une divergence du faisceau optique pulsé (4) ; ou
l'utilisation du multiplexage par répartition en longueur d'onde, WDM, pour augmenter le débit de données transmises, par exemple dans lequel le faisceau optique pulsé (4) comprend une pluralité de longueurs d'onde porteuses différentes avec un flux de données différent encodé sur chaque longueur d'onde porteuse et dans lequel le procédé comprend la séparation des différentes longueurs d'onde porteuses sur différents photodétecteurs (26).

11. Procédé de détermination d'une ou plusieurs propriétés d'un milieu diffusant (8), comprenant :
la transmission d'un faisceau optique pulsé (4) à travers le milieu diffusant (8), le faisceau optique pulsé (4) comprenant une pluralité d'impulsions optiques (42) présentant une séquence de sonde connue ;
le procédé pour une utilisation dans la détection d'un faisceau optique pulsé (4) selon l'une quelconque des revendications 1 à 7 ;
la détection de la lumière diffusée reçue par chaque photodétecteur (26) provenant de la région correspondante du milieu diffusant (8) en fonction du temps afin de générer un signal de photodétecteur variable dans le temps correspondant ;
l'utilisation de la pluralité de signaux de photodétecteur pour déterminer un signal de récepteur optique variable dans le temps représentatif d'une intensité variable dans le temps du faisceau optique pulsé (4) ; et
l'utilisation de la séquence de sonde connue et du signal de récepteur optique variable dans le temps déterminé pour déterminer une ou plusieurs propriétés du milieu diffusant (8).

12. Récepteur optique (20) pour une utilisation dans la détection d'un faisceau optique pulsé (4) qui comprend une pluralité d'impulsions optiques (42) lorsque le faisceau optique pulsé (4) est transmis à travers un milieu diffusant (8), dans lequel le faisceau optique pulsé (4) comprend de la lumière UV-B, de la lumière UV-A, de la lumière visible ou de la lumière infrarouge, IR, et dans lequel le récepteur optique (20) comprend :
un réseau de photodétecteurs (24) qui inclut une pluralité de photodétecteurs (26),
dans lequel le récepteur optique (20) est agencé de sorte que la pluralité de photodétecteurs (26) du réseau de photodétecteurs (24) détectent la lumière qui est diffusée progressivement par la même impulsion optique (42) lorsque l'impulsion optique (42) se propage à travers une pluralité de régions du milieu diffusant (8) et qui est ensuite reçue progressivement sur différents photodétecteurs (26) du réseau de photodétecteurs (24), et
dans lequel le récepteur optique (20) est configuré pour :
la détection de la lumière diffusée reçue par chaque photodétecteur (26) provenant de la région correspondante du milieu diffusant (8) en fonction du temps afin de générer un signal de photodétecteur variable dans le temps correspondant ; et
l'utilisation de la pluralité de signaux de photodétecteur pour déterminer un signal de récepteur optique variable dans le temps représentatif d'une intensité variable dans le temps du faisceau optique pulsé,
dans lequel l'utilisation de la pluralité de signaux de photodétecteur pour déterminer le signal de récepteur optique comprend :
la sélection de l'un des signaux de photodétecteur comme signal de photodétecteur de référence ;
l'application d'un décalage temporel différent à chacun des un ou plusieurs autres signaux de photodétecteur afin de générer un ou plusieurs signaux de photodétecteur décalés dans le temps ;
l'addition du signal de photodétecteur de référence et des un ou plusieurs signaux de photodétecteur décalés dans le temps afin de générer un signal de photodétecteur sommé variable dans le temps ; et
l'exécution d'une corrélation croisée d'une fonction de fenêtre temporelle (44) avec le signal de photodétecteur sommé pour générer le signal de récepteur optique représentatif de l'intensité variable dans le temps du faisceau optique pulsé (4), dans lequel la fonction de fenêtre temporelle (44) présente une durée qui est sélectionnée pour résoudre temporellement l'arrivée de nombreux photons de lumière de fond par rapport à l'arrivée de photons de lumière qui sont diffusés par chaque impulsion optique (42) et reçus sur le réseau de photodétecteurs (24) et/ou qui est sélectionnée pour correspondre à une période d'arrivée de la lumière qui est diffusée par chaque impulsion optique (42) et reçue sur le réseau de photodétecteurs (24) ; ou
dans lequel l'utilisation de la pluralité de signaux de photodétecteur pour déterminer le signal de récepteur optique comprend :
l'exécution d'une corrélation croisée de différentes fonctions de fenêtre temporelle décalées dans le temps (70) avec les différents signaux de photodétecteur pour générer une pluralité de signaux de photodétecteur corrélés de manière croisée et décalés dans le temps ; et
l'addition de la pluralité de signaux de photodétecteur corrélés de manière croisée et décalés dans le temps afin de générer un signal de photodétecteur sommé variable dans le temps, dans lequel le signal de photodétecteur sommé variable dans le temps est le signal de récepteur optique représentatif de l'intensité variable dans le temps du faisceau optique pulsé (4), dans lequel chacune des fonctions de fenêtre temporelle décalées dans le temps (70) présente une durée qui est sélectionnée pour résoudre temporellement l'arrivée de nombreux photons de lumière de fond par rapport à l'arrivée de photons de lumière qui sont diffusés par chaque impulsion optique (42) et reçus sur le réseau de photodétecteurs (24) et/ou qui est sélectionnée pour correspondre à une période d'arrivée de la lumière qui est diffusée par chaque impulsion optique (42) et reçue sur le réseau de photodétecteurs (24).

13. Système optique (2) comprenant :
le récepteur optique (20) selon la revendication 12 ; et
un émetteur optique (6) pour transmettre le faisceau optique pulsé (4) à travers le milieu diffusant (8) afin d'amener la lumière de chaque impulsion optique (42) à être diffusée par le milieu diffusant (8) lorsque chaque impulsion optique (42) se propage à travers la pluralité de régions différentes du milieu diffusant (8).

14. Procédé selon l'une quelconque des revendications 1 à 11, le récepteur optique (20) selon la revendication 12 ou le système optique (2) selon la revendication 13, dans lequel au moins un parmi :
le réseau de photodétecteurs (24) comprend un réseau linéaire de photodétecteurs (26) ou un réseau 2D de photodétecteurs ;
le réseau de photodétecteurs (24) comprend un réseau de détecteurs de photons uniques tels qu'un réseau de diodes à avalanche à photon unique, SPAD, un réseau de photomultiplicateurs au silicium, SiPM, un réseau de compteurs de photons multipixels, MPPC, ou un réseau de tubes photomultiplicateurs, PMT ; et
le réseau de photodétecteurs (24) comprend un réseau de photodiodes.

15. Procédé selon l'une quelconque des revendications 1 à 11, le récepteur optique (20) selon la revendication 12 ou le système optique (2) selon la revendication 13, dans lequel :
le faisceau optique pulsé (4) comprend de la lumière proche infrarouge, de la lumière infrarouge à courte longueur d'onde ou de la lumière infrarouge moyenne, et/ou
le faisceau optique pulsé (4) comprend une lumière cohérente pulsée telle que la lumière laser pulsée.
